# EUROPEAN PATENT APPLICATION

(11) **EP 1 550 843 A1**
(43) Date of publication of application: **06.07.2005**
(21) Application number: 04258170.2
(22) Date of filing: 29.12.2004
(51) Int. Cl.: G01C 21/34, G08G 1/0969

(54) **Navigation when deviating from planned route**

(30) Priority: 05.01.2004 JP 2004000581
(71) Applicant: Pioneer Corporation, Tokyo 153-8654 (JP)
(72) Inventor: Nambata, Ippei c/o Pioneer Corporation, Kawagoe-shi, Saitama 350-8555 (JP)
(74) Representative: Haley, Stephen

(57) **Abstract**

A navigation device (100) has a processor (180) search by a route search section a plurality of candidate routes from a current-position to a destination according to various information, and sets one of the candidate routes as a first guidance route. When recognizing that a way point recognizer acquires way point information about a way point, the processor (180) makes a research section research a first research route from the current-position to the destination including a section of the first guidance route as well as the way point. Owing to this, the navigation device (100) can reset the first research route including at least a section of the first guidance route, i.e., the first research route reflecting the first guidance route, as a second guidance route even after the first guidance route is set.

## Description

The present invention relates to an information-processing device that resets another travel route desired by a user after a travel route has been set, as well as a system thereof, a method thereof, a program thereof and a recording medium storing the program.

Conventionally, such a configuration has been known as an in-vehicle navigation device, which searches a plurality of travel routes from a current position to a destination on the basis of map information owned by this navigation device and sets one of the searched travel routes, for instance, the one having the minimum cost in consideration of the travel time and the travel distance to display it as a setting route. While a vehicle travels along the setting route, when a user sets way point information about a way point not located on the setting route, the navigation device resets a travel route to the destination passing the way point and having the minimum cost to display it as the setting route. Hereinafter, the navigation device having the above configuration will be referred as a conventional navigation device.

On the other hand, such a configuration has been known as an in-vehicle navigation device, which calculates in advance an estimated travel route to the destination by setting a route different from the setting route while the vehicle travels along the setting route set based on various information (for instance, see Reference: JP2003-240572A, the right column on page 4 to the right column on page 8). The above navigation device calculates in advance an estimated travel route deviated from the nearest branching point of the setting route in the driving direction while the vehicle travels along the setting route. The navigation device then resets the estimated travel route previously calculated as the setting route when the vehicle is deviated from the setting route because the user wants to pass the way point not located on the setting route.

However, the conventional navigation device resets the travel route passing the way point and having the minimum cost even when, for instance, the user wants to set a travel route, which is not the route with the minimum cost, as the setting route, after the user passes the way point. Additionally, since the navigation device described in the above Reference calculates so that the estimated travel route is deviated from the nearest branching point of the setting route in the driving direction, the estimated travel route reset as the setting route may not reflect the original setting route. Therefore, such a configuration is desired in which another travel route reflecting the setting route can be reset after the setting route has been set.

An object of the present invention is to provide an information-processing device that can reset another travel route after a travel route has been set, the reset travel route reflecting the previously set travel route, as well as a system thereof, a method thereof, a program thereof and a recording medium storing the program.

An information-processing device according to an aspect of the present invention includes: a current-position information acquirer for acquiring current-position information about a current-position of a mobile body; a destination information acquirer for acquiring destination information about a position of a destination to which the mobile body travels; a way point information acquirer for acquiring way point information about a position of a way point to which the mobile body travels; a route search section for searching a plurality of candidate routes from the current-position of the mobile body to the destination according to the current-position information and the destination information; a route setting section for setting one of the plurality of candidate routes as a guidance route; and a research section for searching a new route from the current-position of the mobile body to the destination including at least a section of the guidance route as well as the way point when it is recognized that new way point information is acquired after the guidance route is set.

An information-processing system according to another aspect of the present invention searches a travel route of a mobile body using a server connected to a terminal unit in a manner capable of transmitting/receiving various information over a network, the terminal unit including: a current-position information generator for generating current-position information about a current-position of the mobile body; a destination information generator for generating destination information about a position of a destination to which the mobile body travels; a way point information generator for generating way point information about a way point to which the mobile body travels; a route setting section for acquiring route information about a candidate route from the current-position of the mobile body to the destination and for generating route setting information including an instruction to set the candidate route as a guidance route; a terminal notification controller for controlling a notifying section that notifies the guidance route; and a terminal transceiver for transmitting to the server the current-position information, the destination information, the way point information and the route setting information and for receiving from the server the route information over the network, the server including: a current-position information acquirer for acquiring the current-position information; a destination information acquirer for acquiring the destination information; a way point information acquirer for acquiring the way point information; a route setting information acquirer for acquiring the route setting information; a route search section for searching the candidate route according to the current-position information and the destination information and for generating route information about the candidate route; a research section for searching a new route including at least a section of the guidance route as well as the way point and for generating the route information about a research route when recognizing that new way point information is acquired after the route setting information is acquired; and a server transceiver for transmitting to the terminal unit the route information about the candidate route and the research route and for receiving from the terminal unit the current-position information, the destination information, the way point information and the route setting information over the network.

An information-processing method according to still another aspect of the present invention includes the steps of: acquiring current-position information about a current-position of a mobile body; acquiring destination information about a position of a destination to which the mobile body travels; searching a candidate route from the current-position of the mobile body to the destination according to the current-position information and the destination information; setting the candidate route as a guidance route; and searching a new route from the current-position of the mobile body to the destination including at least a section of the guidance route as well as a way point when it is recognized that new way point information about the way point to which the mobile body travels is acquired after the guidance route is set.

An information-processing program according to yet another aspect of the present invention executes the above information-processing method by a computer.

A recording medium according to a further aspect of the present invention stores the above information-processing program in a manner readable by a computer.
Fig. 1 is a block diagram showing the brief configuration of a navigation device according to a first embodiment of the present invention;
Fig. 2 is a conceptual diagram schematically showing a table structure for display data of map information according to the first embodiment;
Fig. 3 is a conceptual diagram schematically showing a table structure for matching data of the map information according to the first embodiment;
Fig. 4 is a block diagram showing the brief configuration of a processor of the navigation device according to the first embodiment;
Fig. 5 is a flowchart showing a processing for setting a first guidance route according to the first embodiment;
Fig. 6 is a conceptual diagram showing a plurality of candidate routes searched by a route search section according to the first embodiment;
Fig. 7 is a schematic illustration showing a display screen at the time when one of the plurality of candidate routes is set as a first guidance route according to the first embodiment;
Fig. 8 is a schematic illustration showing a display screen at the time when, after the one candidate route is requested for search, the searched candidate route is set as a first guidance route according to the first embodiment;
Fig. 9 is a flowchart showing a processing for resetting a second guidance route according to the first embodiment;
Fig 10 is a schematic illustration of a display screen showing an example of a first research route according to the first embodiment;
Fig. 11 is a schematic illustration showing a display screen at the time when a second research route is set as a second guidance route according to the first embodiment;
Fig. 12 is a schematic illustration of a display screen showing an example of a second research route according to the first embodiment;
Fig. 13 is a schematic illustration showing a display screen at the time when the first research route is reset as a second guidance route according to the first embodiment;
Fig. 14 is a block diagram showing the brief configuration of a navigation system according to a second embodiment of the present invention;
Fig. 15 is a block diagram showing the brief configuration of a terminal unit according to the second embodiment;
Fig. 16 is a block diagram showing the brief configuration of a processor of the terminal unit according to the second embodiment;
Fig. 17 is a block diagram showing the brief configuration of a server according to the second embodiment;
Fig. 18 is a block diagram showing the brief configuration of a CPU of the server according to the second embodiment;
Fig. 19 is a flowchart showing a processing for setting a first guidance route according to the second embodiment;
Fig. 20 is a flowchart showing a processing for resetting a second guidance route according to the second embodiment; and
Fig. 21 is a flowchart showing a processing for resetting a second guidance route according to the second embodiment.

### [First Embodiment]

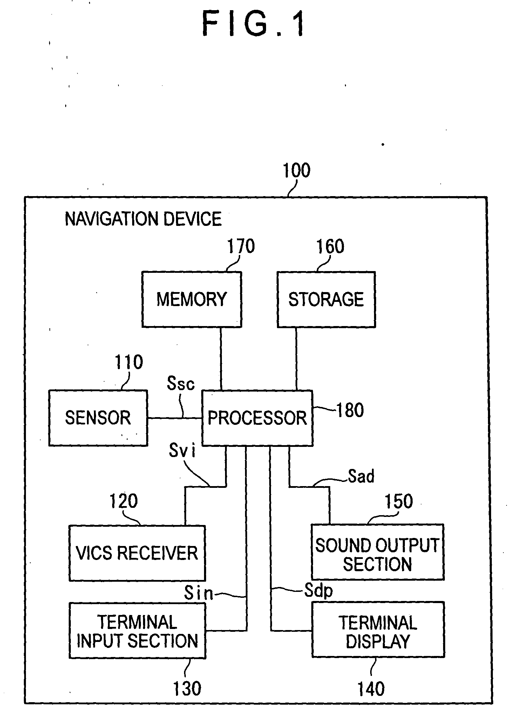

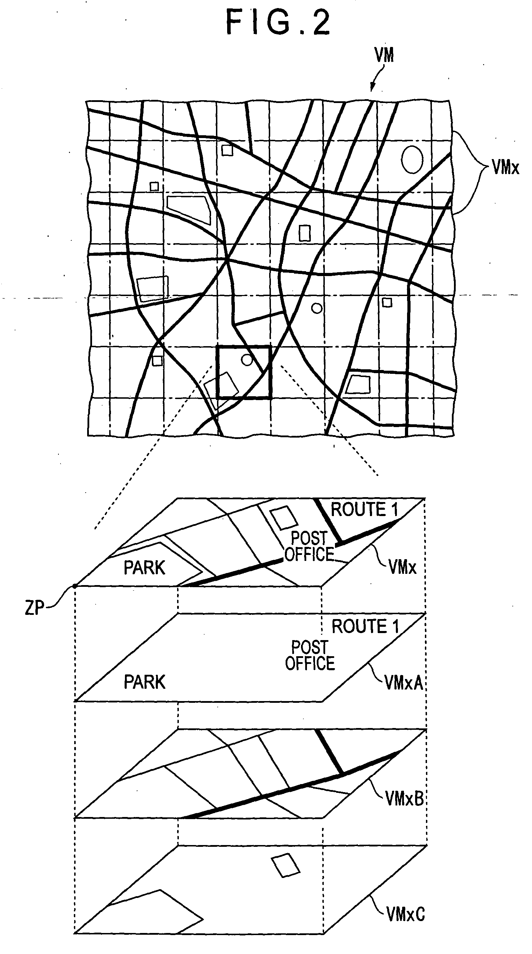

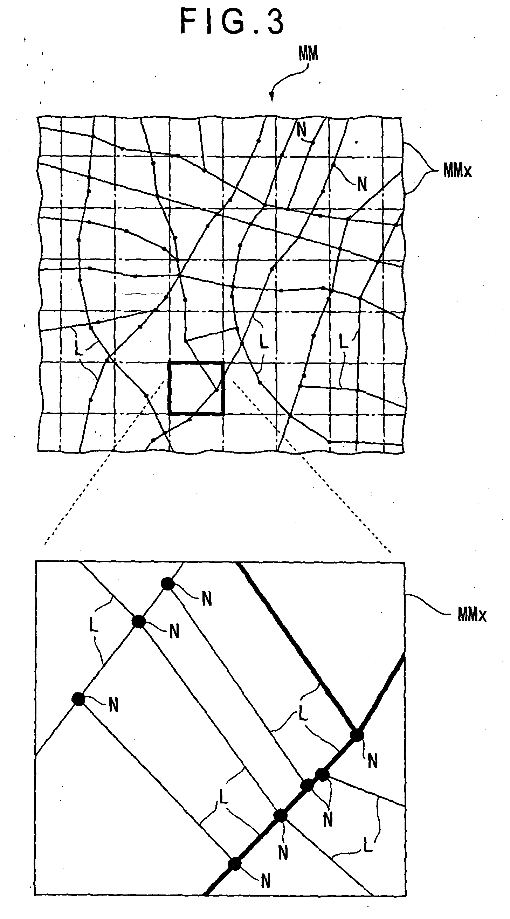

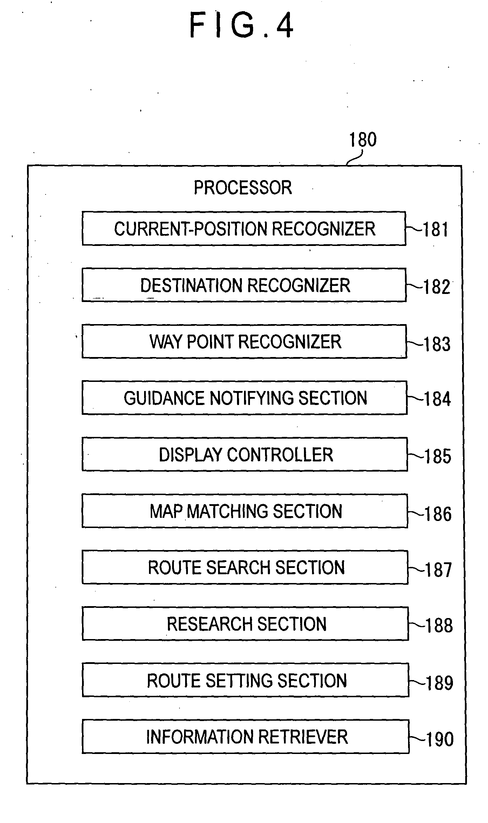

Now, a first embodiment of the present invention will be described below with reference to the attached drawings. A navigation device of this embodiment is an example of an information-processing device of the present invention, which is designed to navigate a mobile body (e.g. a vehicle) driving concerning with a travel status. Note that, the information-processing device of the present invention may be applied to such a configuration that notifies the traffic condition of any mobile body without limiting to a configuration for navigating a vehicle. Fig. 1 is a block diagram showing the brief configuration of the navigation device according to the first embodiment. Fig. 2 is a conceptual diagram schematically showing a table structure for display data of map information. Fig. 3 is a conceptual diagram schematically showing a table structure for matching data of the map information. Fig. 4 is a block diagram showing the brief configuration of a processor of the navigation device.

### [Configuration of Navigation Device]

Referring to Fig. 1, the reference numeral 100 denotes the navigation device. The navigation device 100 notifies guidance for a travel along with a travel status of a mobile body (e.g. a vehicle). The mobile body is not limited to a vehicle, but includes any types of mobile body such as an aircraft and a ship. The navigation device 100 may be, for example, an in-vehicle unit installed in a vehicle as a mobile body, a portable unit, a PDA (Personal Digital Assistant), a mobile phone, a PHS (Personal Handyphone System) or a portable personal computer. The navigation device 100 searches and displays information about a current-position and a destination, a route from the current-position to the destination which passes or does not pass a way point, retrieves for and displays predetermined shops nearby, and displays information about service contents offered by those shops on the basis of map information owned by the navigation device 100. Here, the way point is not limited to a point where a vehicle actually stops by, and, includes a point around the point where a vehicle drives through. As shown in Fig. 1, the navigation device 100 has a sensor 110, a VICS (Vehicle Information Communication System) receiver 120, a terminal input section 130, a terminal display 140 functioning as a notifying section, a sound output section 150, a storage 160, a memory 170, a processor 180 and so on.

The sensor 110 detects the traveling condition of a vehicle as a mobile body, i.e. the current position and the driving status, and outputs it as a predetermined signal Ssc to the processor 180. The sensor 110, for instance, has a GPS (Global Positioning System) receiver (not shown) and various sensors (not shown) such as a speed sensor, an azimuth sensor and an acceleration sensor.

The GPS receiver receives electric navigation waves output from a GPS satellite (not shown), which is an artificial satellite, via a GPS antenna (not shown). Then, the GPS receiver calculates simulated coordinate values of the current-position on the basis of a signal corresponding to the received electric navigation waves and outputs the calculated coordinate values as a GPS data to the processor 180.

The speed sensor of the sensor 110 is arranged on a mobile body (e.g. a vehicle) to detect the driving speed and the actual acceleration of the vehicle on the basis of a signal that varies depending on the driving speed, or the traveling speed, of the vehicle. The speed sensor reads a pulse signal, a voltage value and the like output due to the revolution of the axles and the wheels of the vehicle. Then, the speed sensor outputs detection information such as the read pulse signal and the voltage value to the processor 180. The azimuth sensor is arranged on the vehicle and provided with a so-called gyro-sensor (not shown) so as to detect the azimuth of the vehicle, i.e., the driving direction to which the vehicle is heading. The azimuth sensor outputs a signal representing detection information about the detected driving direction to the processor 180. The acceleration sensor is arranged on the vehicle to detect the acceleration of the vehicle in the driving direction thereof. The acceleration sensor converts the detected acceleration into a sensor output value, which is detection information as according to the pulse and the voltage, and then outputs the sensor output value to the processor 180.

The VICS receiver 120 has a VICS antenna (not shown) and acquires traffic information via the VICS antenna. More specifically, the VICS receiver 120 acquires traffic information (hereinafter referred to as VICS data) about traffic-congestions, traffic accidents, constructions, traffic controls and so on from the VICS (not shown) by way of a beacon, FM multiplex broadcasting or the like. The acquired traffic information is output as a predetermined signal Svi to the processor 180.

The terminal input section 130, which may be a keyboard, a mouse or the like, has various operation buttons and operation knobs (not shown) to be used for input operations. The operation buttons and the operation knobs are used to input, for example, setting items for setting the operation contents of the navigation device 100. For instance, the above setting items include settings of contents and requirements for information to be acquired, settings of the destination and the way point, settings related to a route to be searched, retrieval for information, and displaying the driving condition, i.e., the travel status of the vehicle. When the setting items are input, the terminal input section 130 outputs a predetermined signal Sin to the processor 180 so as to apply the settings. In place of the operation buttons and the operation knobs, the terminal input section 130 may include any types of input unit such as a touch panel that may be arranged at the terminal display 140 and a sound input section for the input operations as long as various setting items can be set.

Under the control of the processor 180, the terminal display 140 displays a signal Sdp representing image data sent from the processor 180. The image data may be those representing map information and retrieval information, TV image data received by a TV receiver (not shown), image data stored in an external device or recording medium such as an optical disc, a magnetic disk or a memory card and read by a drive or a driver, and image data from the memory 170. The terminal display 140 may typically be a liquid-crystal panel, an organic EL (Electro Luminescence) panel, a PDP (Plasma Display Panel), a CRT (Cathode-Ray Tube), a FED (Field Emission Display), or an electrophoretic display panel.

The sound output section 150 has a sound generator such as a speaker (not shown). Under the control of the processor 180, the sound output section 150 outputs various signals Sad as sounds from the sound generator. The various signals Sad represent the sound data etc. from the processor 180. Information output as sounds, which may be the driving direction,'the driving status, the traffic condition and the like of the vehicle, are notified to a passenger such as a driver of the vehicle for navigating the vehicle. The sound generator may output TV sound data received by a TV receiver (not shown) and sound data stored in a recording medium or the memory 170. In place of the sound generator, the sound output section 150 may use a sound generator equipped on the vehicle.

The storage 160, for example, readably stores map information as shown in Figs. 2 and 3. The storage 160 may be drives or drivers for readably storing data on a recording medium such as a HD (Hard Disk), a DVD (Digital Versatile Disc), an optical disc and a memory card.

The map information includes display data VM, which is so-called POI (Point Of Interest) data as shown in Fig. 2, matching data MM as shown in Fig. 3, travel route search map information and the like.

The display data VM includes, for example, a plurality of display mesh information VMx, each having a unique number. To be more specific, the display data VM is divided into a plurality of display mesh information VMx, each relating to an area. The display data VM is constituted from the plurality of display mesh information VMx continuously arranged in a matrix form. The display mesh information VMx may be further divided into a plurality of display mesh information VMx to be contained in a lower layer, each relating to a smaller area.

The display mesh information VMx is, for instance, constituted from name information VMxA such as intersection names, road information VMxB and background information VMxC. The name information VMxA is data structured in a table for arranging and displaying miscellaneous element data (e.g. intersection name, town name) contained in an area at a predetermined position with reference to the positional relationship based on the absolute coordinates. The road information VMxB is data structured in a table for arranging and displaying road element data (e.g. road) contained in an area at a predetermined position with reference to the positional relationship based on the absolute coordinates. The background information VMxC is data structured in a table for arranging and displaying miscellaneous element data (e.g. mark and image information representing famous spots and buildings) at a predetermined position with reference to the positional relationship based on the absolute coordinates.

The matching data MM, just like the display data VM, is divided into a plurality of matching mesh information MMx, each having a unique number and relating to an area. The matching data MM is constituted from the plurality of matching mesh information MMx continuously arranged in a matrix form. The matching mesh information MMx may be further divided into a plurality of matching mesh information MMx to be contained in a lower layer, each relating to a smaller area. The matching mesh information MMx and the display mesh information VMx may not necessarily represent the same area. That is, they may be divided according to different scales.

The matching data MM is used for the map matching processing for correcting the displayed information to locate a mark representing the vehicle on a road, when the traveling condition of the vehicle is superimposed on the map information. This processing prevents such errors that the mark representing the vehicle is displayed on a building instead of the road. The matching data MM has a plurality of link string block information.

As shown in Fig. 3, the link string block information is data structured in a table so that a plurality of links L are mutually associated according to a predetermined rule. The link L as segment information represents a road and connects nodes N as the point information. Specifically, the links L each corresponding to a predetermined segment of a road are mutually connected like a line as a link string, which represents a continuous road such as Koshu street and Ome street. Each link L has unique segment information (hereafter referred to as a link ID) as a unique number assigned to each link L, and node information as a unique number indicating two nodes N connected by the link L. Each link L is associated with a VICS link, so that the positional relationship between the VICS data and the displayed map can be corresponded with each other.

Each node N represents a joint point such as an intersection, a comer, a fork, a junction or the like of each road. Information about the node N has unique point information as a unique number assigned to each node N in the link string block information, coordinate information of the position where each node N is located, and flag information as branching information describing whether the node N represents a branching position (e.g. intersection, fork) where a plurality of links are crossed or not.

Further, the link string block information of the matching data MM is associated with information about the road structure that describes, for example, the number of lanes, the width of road, the number of lights, whether it is a main line or not, whether it is a national road or a state road, a road type such as a toll road, a tunnel structure and the like. Based on the information about the road structure, roads can be displayed on a map corresponding to the display data VM. Additionally, cost information, in which the above-described information about the configuration of the road, is associated with the link string block information.

The travel route search map information is structured in a table, which is similar to that of the matching data MM, including the point information for representing points such as the nodes N representing roads, and the segment information for connecting points such as the links L. The information is so structured to represent roads for searching the travel route.

The storage 160, for instance, stores the retrieval information for acquiring information of a predetermined point in the map information. More specifically, the retrieval information includes various information about contents and guidance such as names of states, cities, regions and points, which are units used to gradually divide the map information into smaller areas, as well as various information about shops as points. The retrieval information is structured in a tree structure table so that item information are hierarchically associated with each other.

The memory 170 readably stores the setting items to be input through the terminal input section 130, music data, image data and the like. The memory 170 also stores various programs that run on the OS (Operating System) controlling the whole operation of the navigation device 100. The memory 170 may preferably be a CMOS (Complementary Metal-Oxide Semiconductor) memory that retains the stored data even in the case of a sudden power interruption caused by a blackout. The memory 170 may include drives or drivers for readably storing data on a recording medium such as a HD, a DVD, or an optical disc.

The processor 180 has various input/output ports (not shown) including a VICS receiving port connected to a VICS antenna, a GPS receiving port connected to a GPS receiver, sensor ports respectively connected to various sensors, a key input port connected to the terminal input section 130, a display control port connected to the terminal display 140, a sound control port connected to the sound output section 150, a storage port connected to the storage 160 and a memory port connected to the memory 170. As shown in Fig. 4, the processor 180 includes as various programs a current-position recognizer 181 as a current-position information acquirer, a destination recognizer 182 as a destination information acquirer, a way point recognizer 183 as a way point information acquirer, a guidance notifying section 184, a display controller 185, a map matching section 186, a route search section 187, a research section 188, a route setting section 189, an information retriever 190 and the like.

The current-position recognizer 181 recognizes the current-position of the vehicle. More specifically, the current-position recognizer 181 calculates a plurality of current simulated positions of the vehicle on the basis of the speed data and the azimuth data of the vehicle output respectively from the speed sensor and the azimuth sensor of the sensor 110. The current-position recognizer 181 further recognizes the current simulated coordinate values of the vehicle on the basis of the GPS data about the current-position output from the GPS receiver. Then, the current-position recognizer 181 compares the calculated current simulated positions with the recognized current simulated coordinate values, and calculates the current-position of the vehicle on the map information separately acquired so as to recognize the current-position.

The current-position recognizer 181 determines a slope angle and an altitude of a road for driving on the basis of the acceleration data output from the acceleration sensor and calculates the current simulated position of the vehicle so as to recognize the current-position. Thus, the current-position of the vehicle can be accurately recognized even if the vehicle is on an intersection with an overpass or on an elevated highway where roads are overplayed in a two-dimensional view. Furthermore, when the vehicle runs on a mountain road or a slope, the current-position recognizer 181 corrects the difference between the travel distance obtained only on the basis of the speed data and the azimuth data and the actual driving distance of the vehicle by using the detected slope angle of the road to accurately recognize the current-position. The current-position recognizer 181 can recognize not only the current-position of the vehicle as described above but also a starting point, i.e. an initial point set by the terminal input section 130 as the current simulated position.

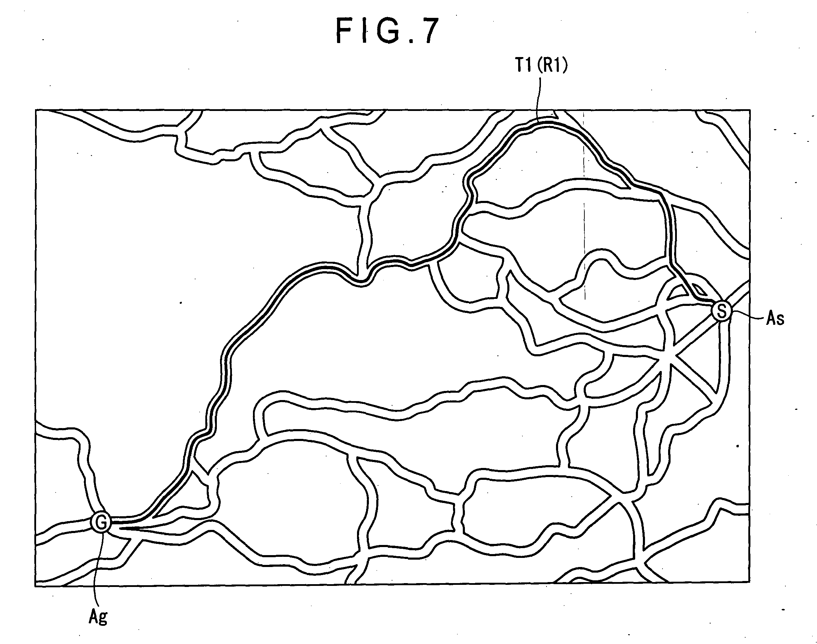

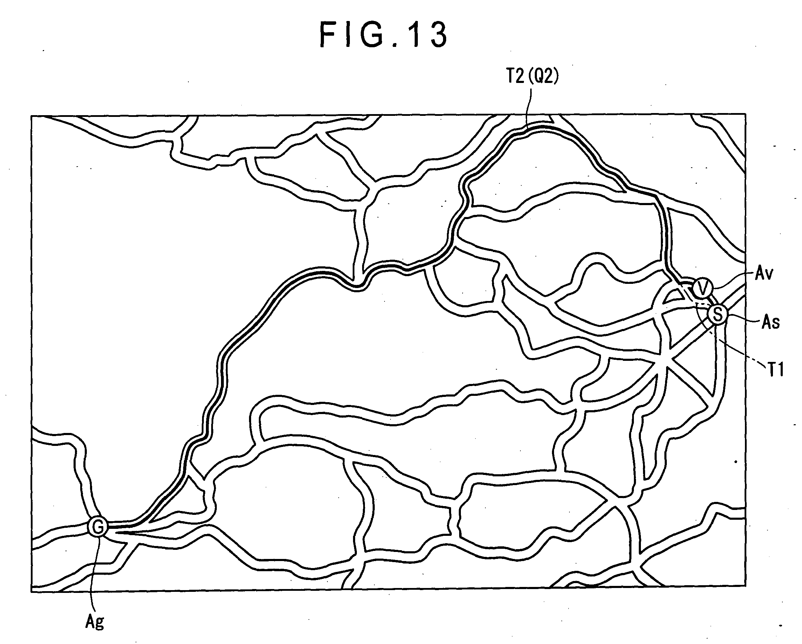

The current-position recognizer 181 generates travel status information indicating the travel status of the vehicle as needed. To be more specific, when recognizing the current-position of the vehicle, the current-position recognizer 181 appropriately determines whether or not the current-position of the vehicle is located on a below-described first guidance route T1 (e.g., see Fig. 7), or on a second guidance route T2 (e.g., see Fig. 13) to be set by the route setting section 189. When recognizing that the current-position of the vehicle is located on the guidance route T1, T2, the current-position recognizer 181 appropriately generates the travel status information indicating that the vehicle travels based on the guidance route T1, T2. On the other hand, when recognizing that the current-position of the vehicle is not located on the guidance route T1, T2, the current-position recognizer 181 appropriately generates the travel status information indicating that the vehicle travels not based on the guidance route T1, T2. Here, although the travel status information is generated based on the determination whether or not the current-position of the vehicle is located on the guidance route T1, T2 as an example, a following configuration is available. For example, even when the current-position of the vehicle is not located on the guidance route T1, T2, such travel status information indicating that the vehicle travels based on the guidance route T1, T2 can be generated if it is recognized that the vehicle is located on the road around the guidance route T1, T2, or if it is recognized that the vehicle passes through, for instance, five arbitrary points or more which represent intersections etc. arranged on the guidance route T1, T2, or a road around the guidance route T1, T2. The various information is then appropriately stored in the memory 170.

The destination recognizer 182, for instance, acquires the destination information about the destination set by the input operation at the terminal input section 130 and recognizes the position of the destination. The destination information includes various information for identifying a location, indicating coordinates such as latitude and longitude, addresses, telephone numbers and the like. The destination information is appropriately stored in the memory 170.

The way point recognizer 183, for instance, acquires way point information about the way point set by the input operation through the terminal input section 130 and recognizes the position of the way point. For example, the way point information may be various information similar to the destination information, however, it is not limited thereto. The way point information is then appropriately stored in the memory 170.

The guidance notifying section 184 notifies guidance on the travel of the vehicle, for instance, the contents for assisting the drive of the vehicle stored in the memory 170 in visual form by using the terminal display 140 or in audio form by using the sound output section 150 on the basis of research route information or candidate route information and feature guidance information acquired in advance according to the driving status of the vehicle. For example, a predetermined arrow and a sign may be displayed on the display screen of the terminal display 140, or a voice guidance such as "Turn right toward XX at the intersections of YY 700m ahead", "The vehicle is off the travel route" or "A traffic-congestion is ahead" may be provided from the sound output section 150.

The display controller 185 controls the terminal display 140 so that the various information can be displayed on the terminal display 140. Additionally, the display controller 185 displays various display screens prompting a user to input for setting the various information using the terminal input section 130.

The map' matching section 186 performs the map matching processing for displaying the current-position recognized by the current-position recognizer 181 based on the map information acquired from the storage 160. As described earlier, the map matching section 186 typically uses the matching data MM for performing the map matching processing to modify or correct the current-position information to prevent the current-position superimposed on the map on the terminal display 140 from being located off the road.

The route search section 187 searches a travel route by calculating a candidate route of the vehicle on the basis of the setting information that is set by a user for setting the route, the VICS data acquired by the VICS receiver 120, the map information stored in the storage 160 and the like.

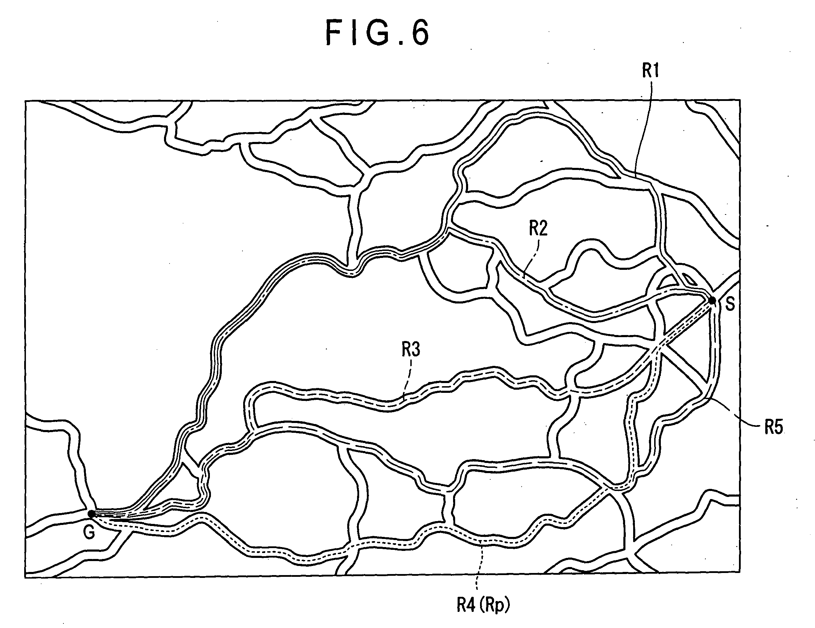

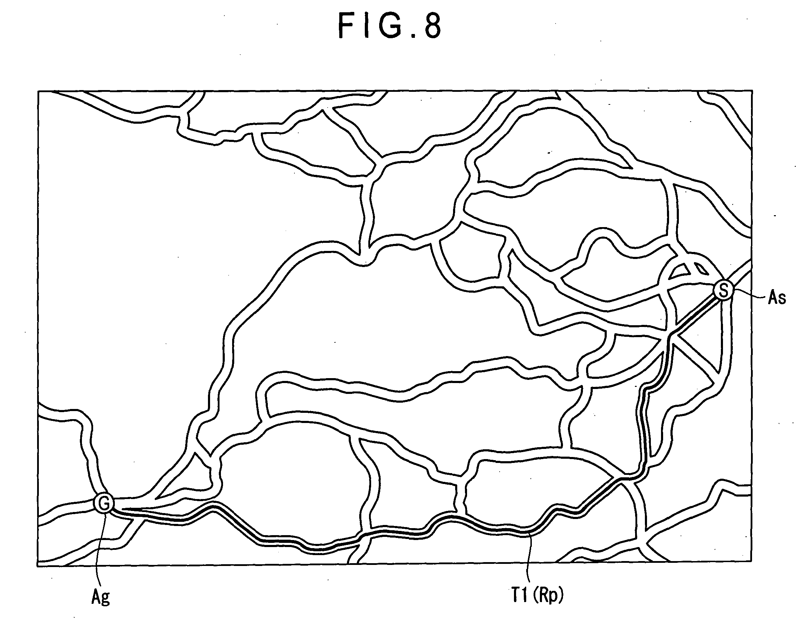

More specifically, the route search section 187 acquires the current-position information, the destination information, the VICS data and the setting information. Based on the acquired various information, a road allowing the vehicle to drive is searched using the travel route search map information contained in the map information. Thereafter, when the setting information includes such information requesting for searching a plurality of candidate routes, the route search section 187 generates a plurality of candidate route information setting a candidate route Rj (j representing a natural number, see Fig. 6 for example) with the least travel time, a candidate route Rj with the shortest travel distance, or a candidate route Rj avoiding the traffic-congestion and the location of the traffic control or the like. On the other hand, when the setting information includes such information requesting for searching one candidate route, the route search section 187 generates single candidate route information setting a candidate route Rp (see Fig. 8) having the minimum cost, in consideration of the travel time and the travel distance. While such a configuration is exemplified here that generates the candidate route information setting the one candidate route Rp having the minimum cost, it is not limited thereto, and a configuration that generates candidate route information setting one candidate route Rp with the least travel time or the shortest travel distance. The acquired candidate route information is appropriately stored in the memory 170.

When the candidate route is searched, the matching data MM of the map information is possibly used in addition to the travel route search map information. This applies to, for instance, the case where the candidate route is searched using a road not contained in the travel route search map information, such as a narrow road, e.g., a back street. The candidate route information includes, for example, the route guidance information for navigating the vehicle to assist the driving thereof. Under the control of the guidance notifying section 184, the route guidance information may be appropriately displayed on the terminal display 140 or output as sounds from the sound output section 150 to assist the driving.

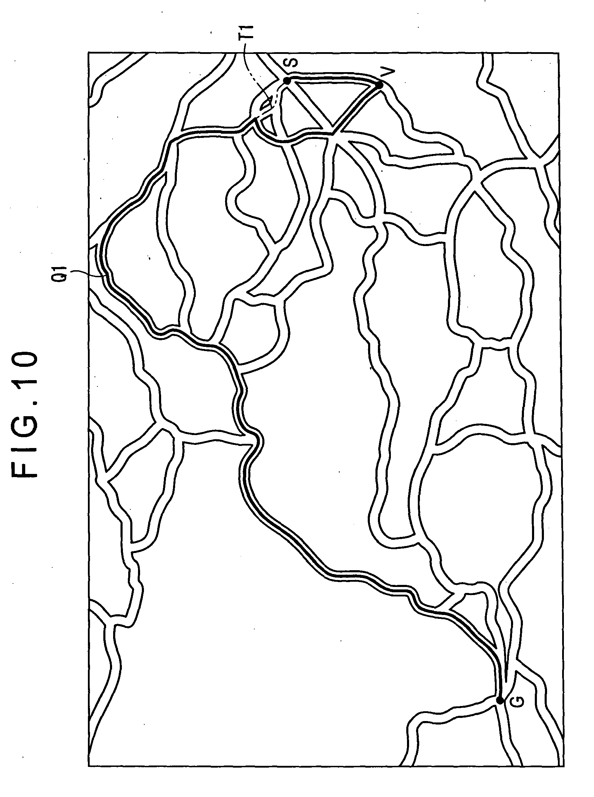

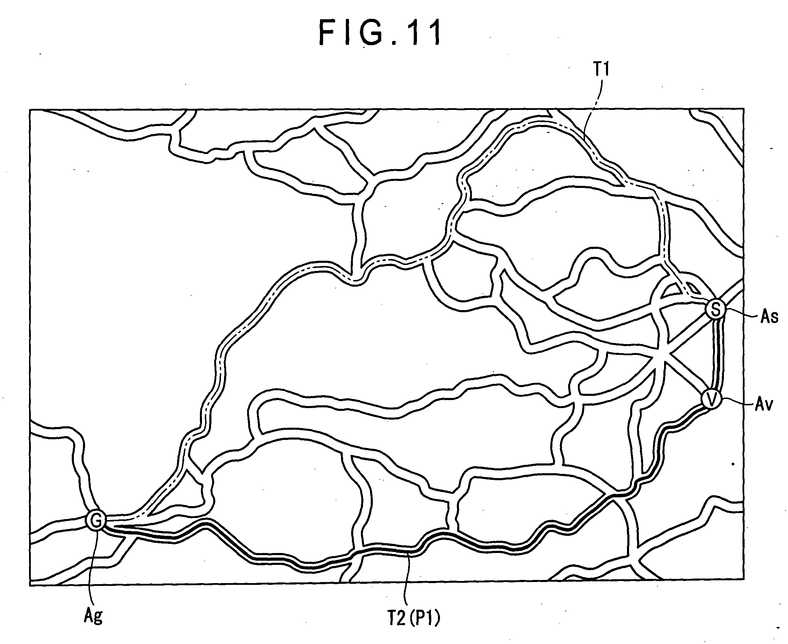

Based on the way point information recognized by the way point recognizer 183, the research section 188 researches a first research route Qj (j representing a natural number, see Fig. 11 for example) as a new route giving preference to the first guidance route T1 set by the route setting section 189, or a second research route Pi (i representing a natural number, see Fig. 10 for example) not giving preference to the first guidance route T1. Giving preference to the first guidance route T1 means that the new route includes at least a section of the first guidance route T1 and is similar to the first guidance route T1. On the other hand, not giving preference to the first guidance route T1 means that the new route is not similar to the first guidance route T1. Note that, the second research route Pi not giving preference to the first guidance route T1 may occasionally include a section of the first guidance route T1.

The research section 188 calculates the distance of a section of the first guidance route T1 contained in each of the researched first research routes Qj to generate research route information setting a first research route Qj with the section of the first guidance route T1 being the longest. Alternatively, such a configuration is also available that determines whether or not each of the first research routes Qj includes a traffic-congestion section, and generates single research route information setting a first research route Qj having no or fewer traffic-congestion sections.

The research section 188 generates single research route information setting, for instance, a second research route Pi with the minimum cost out of the researched second research routes Pi. While the configuration is exemplified here that generates the research route information setting the second research route Pi with the minimum cost, it is not limited thereto, and a configuration that generates research route information setting a second research route Pi with the least travel time or the shortest travel distance, a second research route Pi having no traffic-congestion section, or a second research route Pi having fewer traffic-congestion sections. The research route information is appropriately stored in the memory 170. The research route information includes, for example, the route guidance information for navigating the vehicle to assist the driving thereof similar to the candidate route information.

The route setting section 189 sets the first guidance route T1 as the guidance route according to the candidate route information generated by the route search section 187. The route setting section 189 also resets the second guidance route T2 as the guidance route according to the research route information generated by the research section 188.

More specifically, when acquiring route selecting information input by the input operation through the terminal input section 130 for selecting one of the plurality of candidate routes Rj after recognizing that the route search section 187 has searched the plurality of candidate routes Rj, the route setting section 189 recognizes the candidate route information about the candidate route Rj selected according to the route selecting information. The route setting section 189 then sets the candidate route Rj as the first guidance route T1 according to the recognized candidate route information. Further, when acquiring the candidate route information about the candidate route Rp after recognizing that the route search section 187 has searched the one candidate route Rp, the route setting section 189 automatically sets the candidate route Rp as the first guidance route T1 according to the candidate route information. Alternatively, when recognizing that the vehicle is located on one of the plurality of candidate routes Rj, is located around the route, or travels for a predetermined distance based on the route, after recognizing that the route search section 187 has searched the plurality of candidate routes Rj, for instance, after the vehicle starts moving and travels for a predetermined distance, the route setting section 189 may automatically sets such a candidate route Rj as the first guidance route T1.

Additionally, when acquiring the research route information about the first research route Qj or the second research route Pi generated by the research section 188, the route setting section 189 automatically reset the first research route Qj or the second research route Pi as the second guidance route T2 according to the research route information.

The information retriever 190 hierarchically retrieves and acquires the retrieval information, such as shops and facilities, stored in the storage 160 on the basis of the item information in response to, for example, a retrieval request for the retrieval information set at the terminal input section 130. Besides, the information retriever 190 appropriately searches the retrieval information stored in the storage 160 based on a retrieval method or the like included in way point retrieval method information input through, for instance, the terminal input section 130, and acquires at least single retrieval information about the way point as the way point information. While the retrieval method includes vehicle vicinity retrieval for searching the points around the current-position of the vehicle, route vicinity retrieval for searching the points around the respective guidance routes T1 and T2, coordinate retrieval for searching based on the coordinates such as latitude and longitude, address retrieval, phone number retrieval or the like, it is not limited thereto.

### [Operation of Navigation Device]

Now, the operation of the navigation device 100 will be described with reference to the drawings.

### (Processing for Setting First Guidance Route)

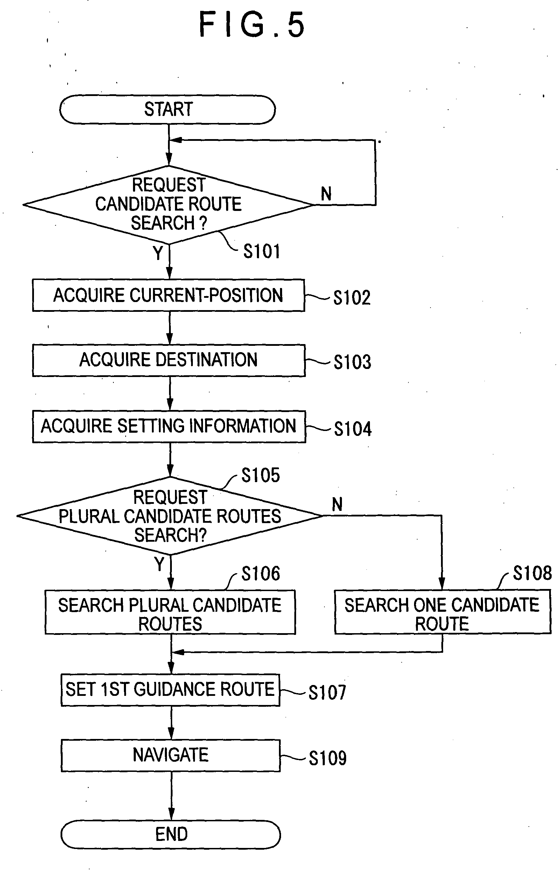

Firstly, a processing for setting the first guidance route T1 is described with reference to Figs. 5 to 8 as an operation of the navigation device 100. Fig. 5 is a flowchart showing the processing for setting the first guidance route. Fig. 6 is a conceptual diagram showing a plurality of candidate routes searched by the route search section. Fig. 7 is a schematic illustration showing a display screen at the time when one of the plurality of candidate routes is set as the first guidance route. Fig. 8 is a schematic illustration showing a display screen at the time when, after the one candidate route is requested for search, the searched candidate route is set as the first guidance route.

Firstly, a user on the vehicle, i.e., a passenger turns on the navigation device 100 to supply the power thereto. When the power is supplied, the processor 180 controls the terminal display 140 by the display controller 185 to display a main menu and a display screen prompting the user to set a specific operation to be executed by the navigation device 100.

As shown in Fig. 5, the user then operates the terminal input section 130 to set a command for searching a candidate route to travel. When recognizing the setting (step S101), the processor 180 makes the display controller 185 display on the terminal display 140 a display screen prompting the user to set various information necessary for searching the candidate routes, such as the destination, the setting information indicating whether or not the plurality of candidate routes are searched.

The processor 180 recognizes the current-position by the current-position recognizer 181 (step S102), and then recognizes the set destination by the destination recognizer 182 (step S103). Specifically, the current-position recognizer 181 calculates the current-position of the vehicle on the basis of the speed data and the azimuth data of the vehicle respectively output from the speed sensor and the azimuth sensor of the sensor 110 and the GPS data about the current-position output from the GPS receiver, and acquires the current-position information. The acquired current-position information is appropriately stored in the memory 170.

The processor 180 controls the terminal display 140 by the display controller 185 to display a screen prompting the user to set the destination with the input operation through the terminal input section 130. Then, when the user sets the destination by input operation through the terminal input section 130 following the instructions on the display screen, the destination recognizer 182 acquires the destination information about the set destination. The acquired destination information is appropriately stored in the memory 170.

If the user requests to acquire information about the point of the destination at the input operation of the destination through the terminal input section 130, the user performs the input operation so as to request the retrieval information of the point following the instructions on the display screen of the terminal display 140. In response to the retrieval request, the processor 180 makes the information retriever 190 hierarchically retrieve the retrieval information about the destination from the mesh information at the lower layers for each area, typically using the map information, and acquire the retrieval information associated with the point of the destination from the storage 160. Then, the display controller 185 of the processor 180 controls the terminal display 140 to display the acquired retrieval information.

If the retrieval information instructs to display a predetermined area of the map information containing the destination or if the user who has recognized the retrieval information operates the terminal input section 130 to display a predetermined area, the display controller 185 appropriately controls the terminal display 140 to display the display mesh information VMx for the corresponding area. After the desired map information is displayed on the terminal display 140 in this way, the user identifies the point information of the destination by appropriately setting the point of the destination with the input operation at the terminal input section 130, for example, by moving the cursor displayed on the map on the screen. When the point information is specified in this way, the destination recognizer 182 of the processor 180 recognizes the point information of the destination as the destination information and stores it in the memory 170.

The processor 180 controls the terminal display 140 by the display controller 185 to display an indication prompting the user to input the setting items, i.e., requirements for searching the candidate route. When the user inputs the setting items by operating the terminal input section 130 following the instruction on the display screen, the processor 180 acquires the setting information about the setting items (step S104). The setting information is appropriately stored in the memory 170.

Thereafter, the processor 180 has the route search section 187 acquire the setting information stored in the memory 170 and determines whether or not the setting information contains the request for searching the plurality of candidate routes (step S105).

In the step S105, when recognizing that the request for searching the plurality of candidate routes is contained, the processor 180 acquires the current-position information, the destination information and the setting information from the memory 170. Besides, the processor 180 acquires the VICS data by the VICS receiver 120. Based on the various information, the processor 180 then performs a route search processing to search the plurality of candidate routes Rj from the current-position of the vehicle to the destination, using the travel route search map information and the matching data MM stored in the storage 160 (step S 106).

For example, when searching a major street of which data is stored and managed in the travel route search map information, the route is searched using the travel route search map information. On the other hand, when searching a minor street of which data is not stored in the travel route search map information, the route from a minor street to a major street is searched using the matching data MM.

The route search section 187 detects the plurality of routes, narrows down the number of routes according to the acquired setting information, and then generates the candidate route information about a plurality of, for example, five candidates routes Rj from the current-position S of the vehicle to the destination G as shown in Fig. 6, meeting the requirements preferred by the user.

Thereafter, the processor 180 operates the display controller 185 to display, for instance, the five candidate routes Rj on the terminal display 140 as shown in Fig. 6 by superimposing the routes one-by-one on the map information based on the candidate route information about the five candidate routes calculated by the route search section 187, as well as a screen prompting the user to set the route selecting information to select one of the displayed candidate routes Rj. Incidentally, the plurality of candidate routes Rj may be displayed on the terminal display 140 by superimposing on the map information at the same time. The processor 180 makes the route setting section 189 recognize the setting of the route selecting information by the input operation of the user, and set the first guidance route T1 according to the candidate route information about the candidate route Rj selected by this route selecting information (step S107). For example, when recognizing the setting of the route selecting information indicating that a candidate route R1 as shown in Fig. 6 has been selected, the processor 180 sets the candidate route R1 as a first guidance route T1 according to the route selecting information. Then, the candidate route information about the candidate route R1 set as the first guidance route T1 is stored in the memory 170 as route setting information.

On the other hand, in the step S105, when recognizing the request for searching one candidate route, the processor 180 performs the same processing as the step S106, and then performs a route search processing for searching one candidate route Rp from the current-position of the vehicle to the destination (step S108).

To be more specific, the route search section 187 detects the plurality of routes according to the travel route search map information, the matching data MM and the like, and then generates, from the detected routes, single candidate route information about one candidate route Rp identical to, for instance, the candidate route R4 as shown in Fig. 6, the route having the minimum cost, in consideration of the travel time and the travel distance.

The processor 180 has the route setting section 189 automatically set the first guidance route T1 according to the single candidate route information generated in the step S108. In other words, the processor 180 performs the processing of the step S107. For example, when recognizing by the route setting section 189 that the single candidate route information about the candidate route Rp having the minimum cost has been generated as shown in Fig. 6, the processor 180 automatically sets the candidate route Rp as the first guidance route T1 according to the candidate route information. Then, the candidate route information about the candidate route Rp set as the first guidance route T1 is stored in the memory 170 as route setting information.

The processor 180 then performs the navigation based on the first guidance route T1 set in the step S107 (step S109). In other words, the processor 180 acquires the map information from the storage 160. For example, if the candidate route R1 is set as the first guidance route T1, the processor 180 operates the display controller 185 to display the candidate route R1 on the terminal display 140 as the first guidance route T1 according to the candidate route information about the candidate route R1, as shown in Fig. 7, by superimposing it on the map information. On the other hand, if the candidate route Rp is set as the first guidance route T1, the display controller 185 displays the candidate route Rp on the terminal display 140 as the first guidance route T1 according to the candidate route information about the candidate route Rp, as shown in Fig. 8, by superimposing it on the map information. Additionally, as shown in Figs. 7 and 8, the display controller 185 displays an icon As representing the current-position S of the vehicle based on the current position information and an icon Ag representing the destination G based on the destination information by superimposing them on the first guidance route T1. The processor 180 then controls the guidance notifying section 184 so that the sound output section 150 outputs sounds to perform the navigation based on the first guidance route T1.

Subsequently, the processor 180 recognizes the travel condition of the vehicle based on the data output from the speed sensor, the azimuth sensor and the acceleration sensor of the sensor 110 and the GPS data output from the GPS receiver. Then, the processor 180 operates the current-position recognizer 181 and the guidance notifying section 184 to notify the guidance information about the travel of the vehicle in visual or audio form on the basis of the recognized travel condition and route guidance information contained in the candidate route information for navigating the travel of the vehicle.

More specifically, the display controller 185 of the processor 180 interconnects the nodes N in the matching mesh information MMx acquired from the storage 160 with a polyline and performs a polyline processing on the basis of the arrangement of roads described in the link string block information of the matching data MM so as to display the roads in the area of the matching mesh information MMx containing the first guidance route T1 on the terminal display 140. Additionally, the display controller 185 superimposes the name information VMxA and the background information VMxC that are miscellaneous element data about the elements of the map excluding roads of the display mesh information VMx in the area corresponding to the matching mesh information MMx acquired from the storage 160. Then, the current-position is superimposed on the displayed map.

In the step of superimposing the current-position, the map matching processing is performed on the basis of the matching data MM to prevent an indication representing the current-position information of the vehicle from being located off the road. Namely, the processor 180 appropriately corrects the current-position information so that the current-position is located on the first guidance route T1 in the matching data MM. Thus the current-position is displayed on the link string connecting links L. In this way, the current-position is superimposed on the map for the navigation. When the current-position reaches the predetermined position, guidance on the traveling direction and the like are provided in visual or audio form.

When the terminal input section 130 is operated to display a map of other areas, the map will be displayed based on the display mesh information VMx acquired from the storage 160 as in the case of the display operation based on the retrieval.

During the travel of the vehicle, the processor 180 operates the route search section 187 to acquire the VICS data about, for instance, the traffic-congestions, traffic accidents, constructions and traffic controls, and weather information. The processor 180 searches a candidate route again according to the acquired VICS data and the weather information in the case that the traveling condition of the vehicle may be affected or changed. The processor 180 has the guidance notifying section 184 notify the guidance on the change or affection.

During the travel of the vehicle, the processor 180 makes the current-position recognizer 181 recognize the current-position of the vehicle and determine whether or not the current-position of the vehicle is located on the first guidance route T1. When recognizing that the current-position of the vehicle is located on the first guidance route T1, travel status information indicating that the vehicle travels based on the first guidance route T1 is generated. On the other hand, when recognizing that the current-position of the vehicle is not located on the first guidance route T1, travel status information indicating that the vehicle travels not based on the first guidance route T1 is generated. The travel status information is appropriately stored in the memory 170.

### (Processing for Resetting Second Guidance Route)

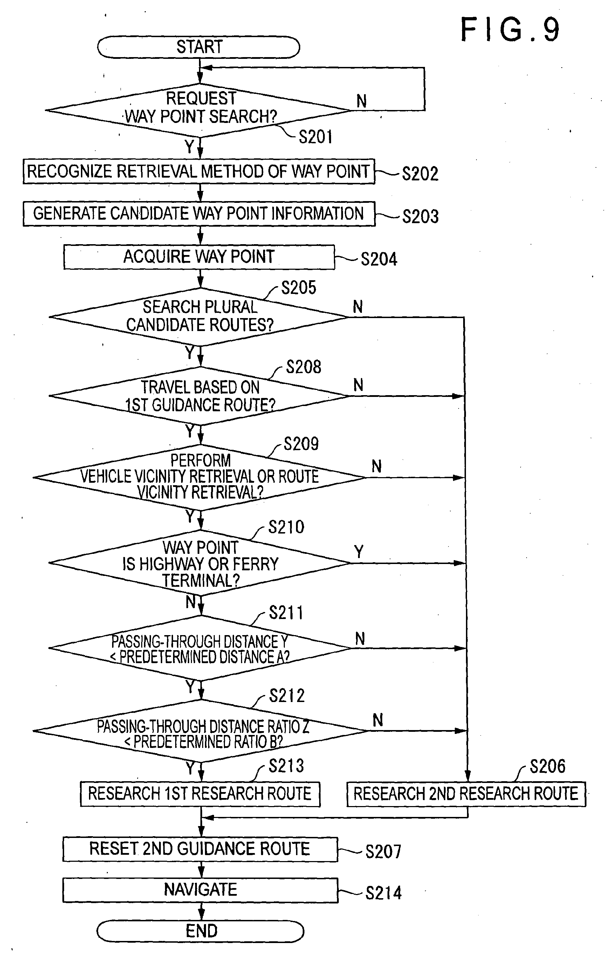

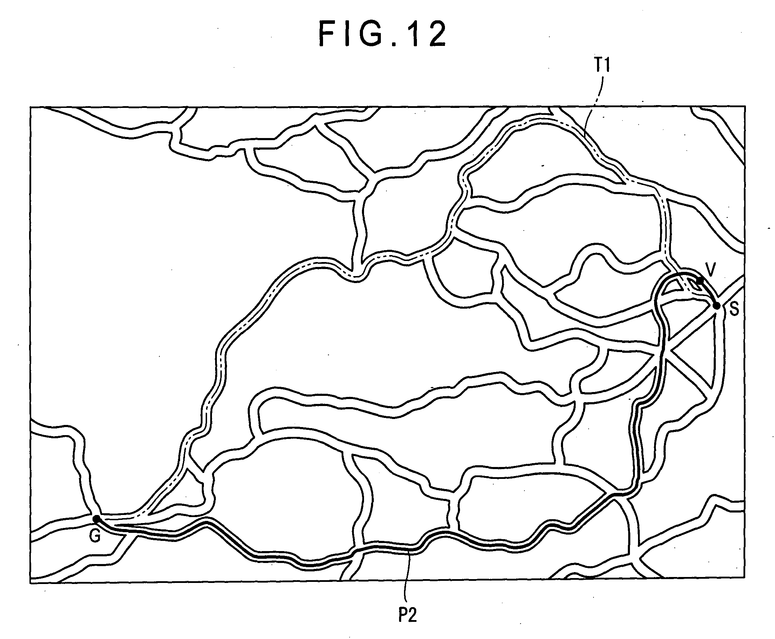

Now, the processing for resetting a second guidance route T2 as one of the operations of the navigation device 100 will be described with reference to Figs. 9 through 13. Fig. 9 is a flowchart showing a processing for resetting the second guidance route. Fig. 10 is a schematic illustration of a display screen showing an example of a first research route. Fig. 11 is a schematic illustration of a display screen at the time when the second research route is reset as a second guidance route. Fig. 12 is a schematic illustration of a display screen showing an example of a second research route. Fig. 13 is a schematic illustration of a display screen when the first research route is reset as the second guidance route.

Firstly as shown in Fig. 9, the user operates the terminal input section 130 to set, for instance, an instruction for searching a way point where the vehicle passes through. When recognizing the setting of the instruction for searching the way point (step S201), the processor 180 controls the display controller 185 to display on the terminal display 140 a display screen prompting the user to set the way point retrieval method information about the retrieval method of the way point.

When acquiring the way point retrieval method information, the processor 180 makes the information retriever 190 recognize the retrieval method of the way point according to the way point retrieval method information (step S202). While the retrieval method of the way point may be applied to vehicle vicinity retrieval, route vicinity retrieval, coordinate retrieval, address retrieval, phone number retrieval or the like, it is not limited thereto. After this, the information retriever 190 appropriately searches the retrieval information stored in the storage 160 according to the retrieval method recognized in the step S202 to acquire at least single way point information about the way point. Then the processor 180 operates the information retriever 190 to generate candidate way point information including the acquired way point information (step S203).

Thereafter, the processor 180 has the way point recognizer 183 acquire the way point information (step S204). To be more specific, the processor 180 controls the display controller 185 to display on the terminal display 140 the way point information contained in the candidate way point information, and to display an indication prompting the user to set way point selecting information instructing selection of one of the way point information. The processor 180 then makes the way point recognizer 183 recognize the setting of the way point selecting information by the input operation of the user, and acquire the way point information selected on account of the recognized way point selecting information. The acquired way point information is appropriately stored in the memory 170.

The processor 180 has the research section 188 determine whether or not the plurality of candidate routes have been searched based on the determination in the processing of the step S105 by way of the route search section 187 (step S205).

In the step S205, when determining that the plurality of candidate routes have not been searched by the route search section 187, the research section 188 recognizes that the one candidate route Rp, for instance, having the minimum cost searched by the route search section 187 is automatically set as the first guidance route T1 as shown in Fig. 8. The research section 188 recognizes that the user need not travel based on the first guidance route T1 after passing the way point, since the first guidance route T1 is not the candidate route Rj selected by the user's decision from the plurality of candidate routes Rj. Thereafter, the research section 188 researches a second research route Pi (step S206).

More specifically, the research section 188 acquires the current-position information, the destination information, the setting information and the way point information from the memory 170. Besides, the processor 180 acquires the VICS data by the VICS receiver 120. The research section 188 researches the second research route Pi based on the various information using the travel route search map information stored in the storage 160. After that, the research section 188 detects a plurality of second research routes Pi, and then generates research route information about a second research route Pi, for instance, having the minimum cost in consideration of the travel time and the travel distance out of these second research routes Pi. The processor 180 operates the route setting section 189 to automatically reset the second research route Pi as the second guidance route T2 according to the one research route information generated by the research section 188 (step S207). Then, the research route information about the second research route Pi reset as the second guidance route T2 is stored in the memory 170 as route setting information.

On the other hand, when determining that the route search section 187 has searched the plurality of candidate routes in the step S205, the research section 188 recognizes that the candidate route Rj, which is selected by the user out of the plurality of candidate routes Rj, is set as the first guidance route T1. The research section 188 recognizes that the user wants to travel based on the first guidance route T1 after passing the way point, since the first guidance route T1 is the candidate route Rj selected by the user's decision. Thereafter, the processor 180 has the research section 188 determine whether or not the vehicle travels based on the first guidance route T1 (step S208). In other words, the research section 188 acquires the travel status information from the memory 170, and determines whether or not the vehicle travels based on the first guidance route T1 according to the contents included in the acquired travel status information.

When determining that the vehicle travels not based on the first guidance route T1 in the step S208, the research section 188 recognizes that the user need not to travel based on the first guidance route T1 after passing the way point. The processor 180 then performs the processing of the step S206 and S207. To be more specific, the processor 180 operates the research section 188 to research a plurality of second research routes Pi, and to generate research route information about the second research route Pi, for instance, with the minimum cost out of the searched second research routes Pi. Then, the processor 180 makes the route setting section 189 automatically reset the second research route Pi of the research route information as the second guidance route T2.

On the other hand, when determining that the vehicle travels based on the first guidance route T1 in the step S208, the research section 188 recognizes that the user wants to travel based on the first guidance route T1 after passing the way point. The research section 188 determines whether the retrieval method of the way point recognized in the step S202 is the vehicle vicinity retrieval or the route vicinity retrieval (step S209).

When recognizing that the retrieval method is not the vehicle vicinity retrieval or the route vicinity retrieval in the step S209, i.e., when recognizing that the retrieval method is, for example, the address retrieval or the phone number retrieval, the research section 188 recognizes that the way point which is not the vicinity of the first guidance route T1 may be searched based on this retrieval method. The research section 188 recognizes that the user need not travel based on the first guidance route T1 after passing the way point, in the case that the way point which is not the vicinity of the first guidance route T1 is searched. Thereafter, the processor 180 performs the processing of the step S206 and S207.

On the other hand, when determining that the retrieval method is the vehicle vicinity retrieval or the route vicinity retrieval in the step S209, the research section 188 recognizes that only the way point around the first guidance route T1 is searched by the retrieval based on this retrieval method. The research section 188 recognizes that the user wants to travel based on the first guidance route T 1 after passing the way point, since only the way point around the first guidance route T1 is searched. Thereafter, the research section 188 determines whether or not the way point specified by the way point information acquired in the step S204 represents a facility allowing the vehicle to travel quickly such as a highway or a ferry terminal (step S210). Note that, while a highway or a ferry terminal is exemplified as a facility allowing the vehicle to travel quickly, it is not limited thereto.

When determining that the way point is a facility allowing the vehicle to travel quickly in the step S210, the research section 188 recognizes that the user wants to travel quickly to the destination even if the route is not corresponding to the first guidance route T1 after passing the way point. The processor 180 then performs the processing of the step S206 and S207.

On the other hand, when determining that the way point is not a facility allowing the vehicle to travel quickly, i.e., when determining that the way point is a facility not allowing the vehicle to travel quickly such as a restaurant in the step S210, the research section 188 recognizes that the user wants to travel based on the first guidance route T1 after passing the way point. The research section 188 then determines whether or not a passing-through distance Y which is a sectional distance from the way point to the guidance route, i.e., the distance from the first guidance route T1 to the way point, is shorter than a predetermined distance A preset as, for example, 500m (step S211). In other words, the research section 188 acquires the way point information and the route setting information about the first guidance route T1 from the memory 170. Based on the acquired information, the research section 188 calculates the shortest distance from the first guidance route T1 to the way point as the passing-through distance Y, and recognizes whether or not the calculated passing-through distance Y is 500m or shorter. The calculated passing through distance Y is appropriately stored in the memory 170. Note that, while the predetermined distance A is set as 500m, it is not limited thereto, and the predetermined distance A may be 100m or 1km.

When recognizing that the passing-through distance Y is longer than the predetermined distance A in the step S211, the research section 188 recognizes that the user need not travel based on the first guidance route T1 after passing the way point, because the way point is away from the first guidance route T1. The processor 180 then performs the processing of the step S206 and S207.

On the other hand, when recognizing that the passing-through distance Y is shorter than the predetermined distance A in the step S211, the research section 188 recognizes that the user wants to travel based on the first guidance route T1 after passing the way point, because the way point is around the first guidance route T1. The research section 188 then determines whether or not a passing-through distance ratio Z, or a ratio representing a value in which the passing-through distance Y is divided by the route distance X as a sectional distance of the guidance route representing the entire distance of the first guidance route T1 is smaller than a predetermined ratio B preset as, for instance, 0.1 (step S212). In other words, the research section 188 acquires the route distance Y and the route setting information from the memory 170, and calculates the route distance X of the first guidance route T1 based on the acquired route setting information. Then, the passing-through distance ratio Z is obtained since the route distance Y calculated in the step S211 is divided by the route distance X, and determines whether or not the obtained passing-through distance ratio Z is 0.1 or less. The calculated route distance X and the passing-through distance ratio Z are appropriately stored in the memory 170. Note that, while the predetermined ratio B is set as 0.1, it is not limited thereto, and the predetermined ratio B may be 0.01 or 1.

When determining that the passing-through distance ratio Z is larger than the predetermined ratio B in the step S212, the research section 188 recognizes that the distance from the way point to the first guidance route T1 is relatively long, and thus recognizes that the way point is relatively away from the first guidance route T1. The research section 188 recognizes that the user need not travel based on the first guidance route T1 after passing the way point, since the way point is relatively away from the first guidance route T1. Thereafter, the processor 180 performs the processing of the step S206 and S207.

On the other hand, when determining that the passing-through distance ratio Z is smaller than the predetermined ratio B in the step S212, the research section 188 recognizes that the distance from the way point to the first guidance route T1 is relatively short, and thus recognizes that the way point is a point relatively close to the first guidance route T1. The research section 188 recognizes that the user wants to travel based on the first guidance route T1 after passing the way point, because the way point is relatively close to the first guidance route T1. Thereafter, the research section 188 researches a first research route Qj (step S213).

More specifically, the research section 188 acquires the current-position information, the destination information, the way point information and the setting information from the memory 170. Besides, the processor 180 acquires the VICS data by the VICS receiver 120. Moreover, the research section 188 acquires the candidate route information related to the first guidance route T1 from the memory 170. The research section 188 researches the first research route Qj based on the acquired various information using the travel route search map information stored in the storage 160. Then, the research section 188 detects a plurality of first research routes Qj and calculates a distance of a section of the first guidance route T1 included in each of the first research routes Qj. The research section 188 generates research route information about the first research route Qj of which the calculated distance of the section is the longest. The processor 180 operates the route setting section 189 to automatically reset the first research route Qj as the second guidance route T2 according to the single research route information generated by the research section 188. Namely, the processor 180 performs the processing of the step S206 and S207. Then, the research route information about the first research route Qj reset as the second guidance route T2 is stored in the memory 170 as route setting information.

The processor 180 then performs the navigation based on the second guidance route T2 reset in the step S207 (step S214).

In other words, the step 180 acquires the map information from the storage 160. The processor 180 makes the display controller 185 display the second guidance route T2 on the terminal display 140 according to the route setting information about the second guidance route T2 reset in the step S207.

For example, in the situation where the first guidance route T1 is set as shown in Fig. 7, when determining that the passing-through distance Y is longer than the predetermined distance A at the processing of the step S211, the processor 180 resets the second research route Pi as the second guidance route T2 in the step S207. Therefore, the processor 180 makes the display controller 185 display, for example, the second research route P1 with the minimum cost as the second guidance route T2 dissimilar to the first guidance route T1 as shown in Fig. 11, instead of the first research route Q1 from the current-position S of the vehicle to the destination G passing the way point V, including a section of the first guidance route T1 and thus being similar to the first guidance route T1 as shown in Fig. 10.

For example, in the situation where the first guidance route T1 is set as shown in Fig. 7, when determining that the passing-through distance ratio Z is smaller than the predetermined ratio B at the processing of the step S212, the processor 180 resets the first research route Qj as the second guidance route T2 in the step S213. Therefore, the processor 180 makes the display controller 185 display, for example, the first research route Q2 including a section of the first guidance route T1 and thus being similar to the first guidance route T1 as the second guidance route T2 as shown in Fig. 13, instead of the second research route P2 with the minimum cost from the'current-position S of the vehicle to the destination G passing the way point V and thus being dissimilar to the first guidance route T1 as shown in Fig. 12.

Besides, the display controller 185 displays an icon As representing the current-position S of the vehicle based on the current-position information, an icon Ag representing the destination G based on the destination information, an icon Av representing the way point V based on the way point information and the like by superimposing them on the second guidance route T2 as shown in Figs. 11 and 13. The processor 180 then controls the guidance notifying section 184 so that the sound output section 150 outputs sounds to perform the navigation based on the second guidance route T2. The processor 180 makes the route search section 187 search the respective candidate routes, and makes the current-position recognizer 181 generate the travel status information to store it in the memory 170.

### [Advantages of First Embodiment]

In the first embodiment described above, the processor 180 of the navigation device 100 operates the route search section 187 to acquire the current-position information, the destination information and the setting information stored in the memory 170. The processor 180 then makes the route search section 187 search a plurality of candidate routes Rj from the current-position to the destination based on the acquired various information, makes the route setting section 189 set one of the plurality of candidate routes Rj as a first guidance route T1 to store in the memory 170 as well as the candidate route information about the candidate route Rj, which is set as the first guidance route T1, as the route setting information. The processor 180 has the way point recognizer 183 store the way point information in the memory 170. When recognizing that the way point recognizer 183 has acquired the way point information, the processor 180 operates the research section 188 to research the first research route Qj to the destination, the route giving preference to the first guidance route T1, that is, the route to the destination passing the way point including at least a section of the first guidance route T1, according to the way point information and the route setting information.

Accordingly, the navigation device 100 can research the first research route Qj including at least a section of the first guidance route T1 even after the first guidance route T1 has been set. Thus, the navigation device 100 can reset the first research route Qj reflecting the first guidance route T1 as the second guidance route T2 even after the first guidance route T1 has been set.

Additionally, the processor 180 makes the display controller 185 display the plurality of candidate routes Rj searched by- the route search section 187 on the terminal display 140, and also display an indication prompting the user to set the route selecting information for selecting one of these candidate routes Rj. When recognizing the setting of the route selecting information by the user, the processor 180 has the route setting section 189 set the candidate route Rj, which is selected according to the route selecting information, as the first guidance route T1. Accordingly, the first research route Qj including a section of the first guidance route T1 intentionally selected by the user out of the plurality of candidate routes Rj, in other words, the first guidance route T1 that the user wants to drive continuously even after passing the way point can be researched. Thus, the navigation device 100 can reset the first research route Qj reflecting the first guidance route T1 desired by the user as the second guidance route T2.

Further, the processor 180 has the current-position recognizer 181 generate the travel status information including information whether or not the vehicle travels based on the first guidance route T1 and store it in the memory 170. When determining that the vehicle travels based on the first guidance route T1 according to the travel status information, the processor 180 then makes the research section 188 research the first research route Qj to the destination passing the way point based on the first guidance route T1. Therefore, the navigation device 100 can research the first research route Qj based on the first guidance route T1 where the user intentionally travels without any obligations, that is, where the user wants to travel even after passing the way point. Thus, the navigation device 100 can reset the first research route Qj reflecting the first guidance route T1 desired by the user as the second guidance route T2 even after the first guidance route T1 has been set.

Furthermore, the processor 180 makes the current-position recognizer, 181 determine whether or not the current-position of the vehicle is located on the first guidance route T1, and also determine whether or not the vehicle travels based on the first guidance route T1. According to this determination, the travel status information indicating whether or not the vehicle travels based on the first guidance route T1 is appropriately generated. Therefore, using the current-position recognizer 181, the processor 1-80 can determine whether or not-the vehicle travels-based on the first guidance route T1 by a simple method determining whether or not the current-position of the vehicle is located on the first guidance route T1. Accordingly, the processing time for generating the travel status information can be shortened.

The processor 180 makes the research section 188 calculate the distance of a section of the first guidance route T1 contained in each of the first research routes Qj, and makes the route setting section 189 automatically reset the first research route Qj with the calculated distance of the section being the longest as the second guidance route T2. Therefore, the navigation device 100 can reset the first research route Qj the most similar to the first guidance route T1 where the user wants to travel even after passing the way point as the second guidance route T2. Thus, the navigation device 100 can reset the second guidance route T2 further reflecting the first guidance route T1 desired by the user.

When recognizing that the passing-through distance Y from the first guidance route T1 to the way point is shorter than the predetermined distance A, the processor 180 makes the research section 188 research the first research route Qj to the destination passing the way point based on the first guidance route T1. Because of this, when the way point located around the first guidance route T1 where the user wants to drive is set, the navigation device 100 can research the first research route Qj based on the first guidance route T1, and reset the first research route Qj. Accordingly, the navigation device 100 can reset the first research route Qj meeting with the user's wishes further as the second guidance route T2.

When recognizing that the passing-through distance ratio Z representing a value in which the passing-through distance Y is divided by the route distance X, or the entire distance of the first guidance route T1, is smaller than the predetermined ratio B, the processor 180 makes the research section 188 research the first research route Qj to the destination passing the way point based on the first guidance route T1. Because of this, when the way point located relatively close to the first guidance route T1 where the user wants to drive is set, the navigation device 100 can research the first research route Qj based on the first guidance route T1, and then reset the first research route Qj. Accordingly, the navigation device 100 can reset the first research route Qj meeting with the user's wishes further as the second guidance route T2.

The processor 180 makes the information retriever 190 search at least one way point based on the retrieval method of the way point contained in the way point retrieval method information set by the user, and generates the candidate way point information including the way point information about the searched way point. The way point recognizer 183 then acquires the way point information based on the way point selecting information set by the user. Therefore, the user can acquire the candidate way point information without the setting of specific information about the way point, and select to set the desirable candidate way point from the candidate way point information. Thus, the user can set the way point more easily.

When recognizing that the retrieval method of the way point is the one like the vehicle vicinity retrieval for searching, for instance, the way point around the vehicle, the processor 180 makes the research section 188 research the first research route Qj to the destination passing the way point based on the first guidance route T1. Because of this, when the user sets the way point located around the vehicle on which the user rides, the navigation device 100 can research the first research route Qj based on the first guidance route T1 where the user wants to drive, and reset the first research route Qj. Accordingly, the navigation device 100 can reset the first research route Qj meeting with the user's wishes further as the second guidance route T2.

When recognizing that the way point is searched as a facility allowing the vehicle to drive quickly, e.g. a highway, the processor 180 makes the research section 188 research the second research route Pi to the destination using a highway or the like regardless of the first guidance route T1, instead of the first research route Qj based on the first guidance route T1. Therefore, when the user sets, for instance, a highway which is a way other than the one driving on the first guidance route T1 because the user wants to travel quickly, the navigation device 100 can research the second research route Pi using a highway regardless of the first guidance route T1, and reset the second research route Pi. Accordingly, the navigation device 100 can reset the second research route Pi meeting with the user's wishes as the second guidance route T2.

Here, the processor 180 performs a following processing when researching the first research route Qj. That is, the route search section 187 searches the candidate routes Rj in ascending order of, for instance, the integration value of the cost information about the road. Note that, the numeric of the cost information is set smaller as the road is wider or has the larger number of lanes, causing the vehicle to drive more easily. The research section 188 then generates corrected cost information in which a predetermined value is subtracted from the numeric of the cost information about the road of the candidate route Rj set as the first guidance route T1, or alternatively generates corrected cost information in which the cost information is set as "0". When researching the route, the research section 188 then researches the first research route Qj or the second research route Pi having the smaller integration value of the cost information using the corrected cost information. Therefore, the processor 180 makes the research section 188 research the route including a section of the first guidance route T1 constituted by the road associated with the corrected cost information with the smaller numeric, namely, research the first research route Qj. Accordingly, the navigation device 100, with the use of the research section 188, can reset the first research route Qj as the second guidance route T2 by a simple configuration of researching the route having smaller integration value of the cost information about the road.

### [Second Embodiment]

Now, a second embodiment of the present invention will be described with reference to the attached drawings. A communication navigation system of this embodiment is an example of an information-processing system as an information-processing device of the present invention, and so designed to navigate the drive of a mobile body (e.g. a vehicle) along with the driving status. Note that, the information-processing system of the present invention is not limited to a configuration for navigating a vehicle, but includes a configuration for notifying the traffic condition of any mobile body.

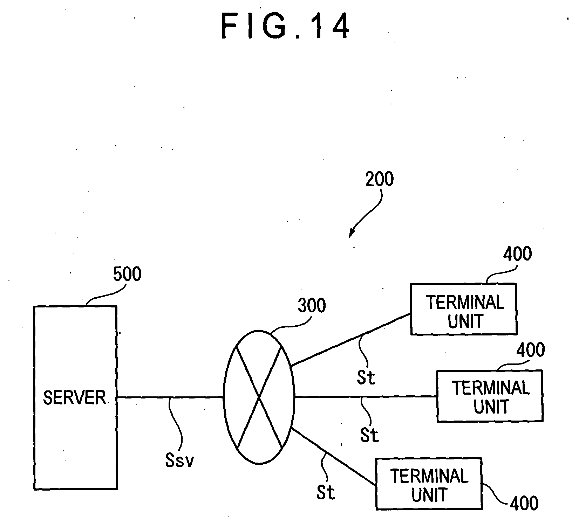

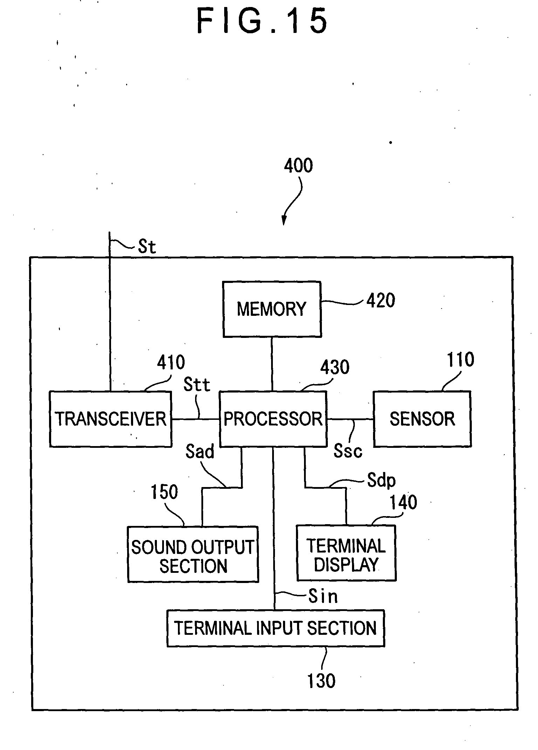

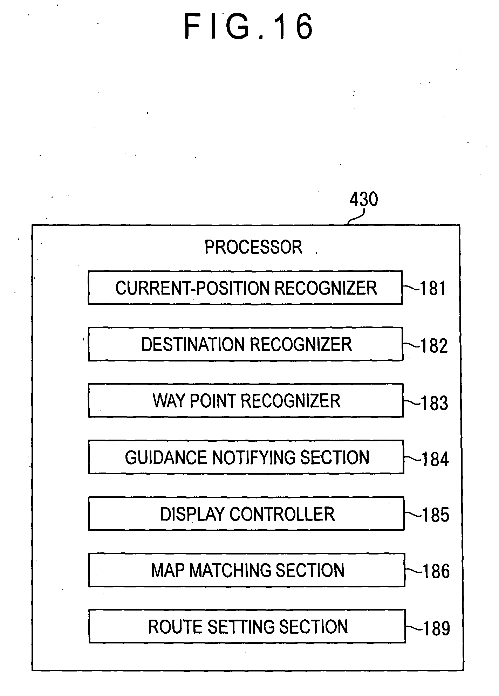

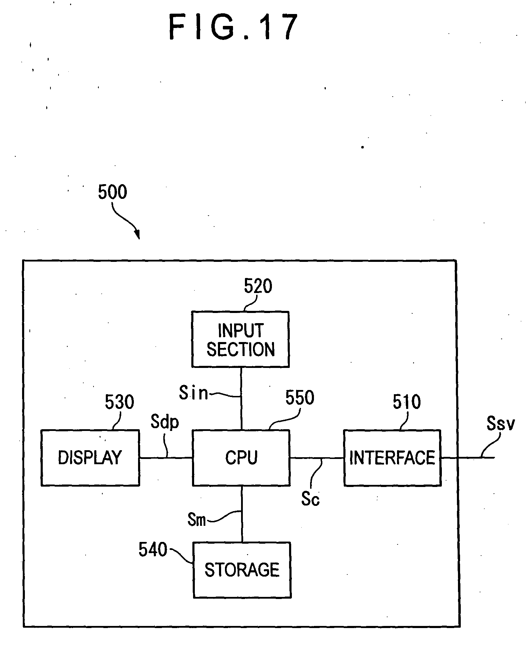

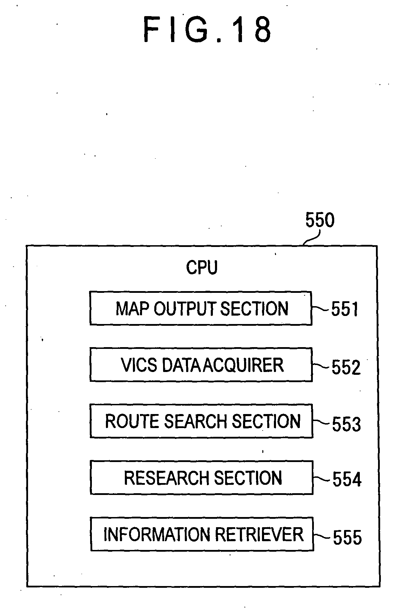

Fig. 14 is a block diagram showing the brief configuration of the navigation system according to the present embodiment. Fig. 15 is a block diagram showing the brief configuration of a terminal unit. Fig. 16 is a block diagram showing the brief configuration of a processor of the terminal unit. Fig. 17 is a block diagram showing the brief configuration of a server. Fig. 18 is a block diagram showing the brief configuration of a CPU of the server. The components same as those in the first embodiment are denoted respectively by the same reference symbols and will not be described any further.

### [Configuration of Navigation System]

Referring to Fig. 14, the reference numeral 200 denotes the communication navigation system (information-processing system). The navigation system 200 notifies guidance on a travel along with a travel status of a mobile body (e.g. a vehicle). The mobile body is not limited to a vehicle, but includes any types of mobile body such as an aircraft and a ship. The navigation system 200 has a network 300, a terminal unit 400 as an information-processing device, and a server 500.

The network 300 is connected to the terminal unit 400 and the server 500. The network 300 interconnects the terminal unit 400 and the server 500 to enable the communication therebetween. The network 300 may be Internet based on a general-purpose protocol such as TCP/IP protocol, an intranet, a LAN (Local Area Network), a communication network and a broadcasting network that have a plurality of base stations capable of communicating by way of a radio medium, or the radio medium itself that enables direct communication between the terminal unit 400 and the server 500. The radio medium may be any one of electric waves, light beams, acoustic waves and electromagnetic waves.

Like the navigation device 100 of the first embodiment, the terminal unit 400 may be, for example, an in-vehicle unit installed in a vehicle as a mobile body, a portable unit, a PDA (Personal Digital Assistant), a mobile phone, a PHS (Personal Handyphone System) or a portable personal computer. The terminal unit 400 acquires map information distributed by the server 500 over the network 300. On the basis of the map information, the terminal unit 400 searches and displays information about a current-position and a destination, candidate routes, predetermined shops nearby, and information about service contents offered by the shops. As shown in Fig. 15, the terminal unit 400 includes a transceiver 410 that operates as a terminal transceiver, a sensor 110, a terminal input section 130, a terminal display 140, a sound output section 150, a memory 420, a processor 430 and so on. The terminal input section 130 and the processor 430 constitute the current-position information generator, the destination information generator and the way point information generator of the present invention.

The transceiver 410 is connected to the server 500 over the network 300, and also connected to the processor 430. The transceiver 410 can receive a terminal signal St from the server 500 over the network 300. When acquiring the terminal signal St, the transceiver 410 performs a preset input interface processing so as to output the terminal signal St as a processing terminal signal Stt to the processor 430. The transceiver 410 can also input the processing terminal signal Stt from the processor 430. When acquiring the processing terminal signal Stt to be input, the transceiver 410 performs a preset output interface processing so as to send the processing terminal signal Stt as the terminal signal St to the server 500 over the network 300.

The sensor 110 detects the traveling condition of the vehicle, or the current-position and the driving status, and outputs it as a predetermined signal Ssc to the processor 430.

The terminal input section 130 has various operation buttons and operation knobs (not shown) to be used for input operations. The operation buttons and the operation knobs are used to input, for example, the settings for the operations of the terminal unit 400. More specifically, they may be used: to issue an instruction for executing a communication operation as communication request information for acquiring information over the network 300; to set the type of information to be acquired and acquiring requirements; to set a destination and a way point; to set about a route to be searched; retrieval of information; and to display the driving status (travel status) of the vehicle. When the settings are input, the terminal input section 130 outputs a predetermined signal Sin to the processor 430 so as to apply the settings.

The terminal display 140, under the control of the processor 430, displays a signal Sdp representing image data sent from the processor 430. The image data may be image data of the map information and the retrieval information sent from the server 500.

The sound output section 150, under the control of the processor 430, outputs and notifies various signals Sad as sounds from a sound generator. The various signals Sad represent the sound data etc. from the processor 430.

The memory 420 appropriately stores various information acquired over the network 300, the setting items that are input by the terminal input section 130, music data, image data and the like. The memory 420 also stores various programs that run on the OS (Operating System) controlling the whole operation of the terminal unit 400. The memory 420 may include drives or drivers for readably storing data on a recording medium such as a HD (Hard Disk) or an optical disc.

The processor 430 has various input/output ports (not shown) including a communication port connected to the transceiver 410, a GPS receiving port connected to a GPS receiver of the sensor 110, sensor ports respectively connected to various sensors of the sensor 110, a key input port connected to the terminal input section 130, a display control port connected to the terminal display 140, a sound control port connected to the sound output section 150 and a storage port connected to the memory 420. As shown in Fig. 16, the processor 430 includes a current-position recognizer 181, a destination recognizer 182, a way point recognizer 183, a guidance notifying section 184, a display controller 185 functioning as a terminal notification controller, a map matching section 186, a route setting section 189 and the like.

The current-position recognizer 181 recognizes the current-position of the vehicle. The current-position recognizer 181 generates travel status information indicating the travel status of the vehicle as needed. Various information acquired by the current-position recognizer 181 are appropriately stored in the memory 420.

The destination recognizer 182, for instance, acquires the destination information about the destination set by the input operation at the terminal input section 130 and recognizes the position of the destination. The destination information is appropriately stored in the memory 420.

The way point recognizer 183, for instance, acquires the way point information about the way point set by the input operation through the terminal input section 130 and recognizes the position of the way point. The way point information is appropriately stored in the memory 420.

The guidance notifying section 184 provides guidance stored in the memory 420 on the basis of the candidate route information or the research route information and feature guidance information acquired in advance according to the driving status of the vehicle. The guidance is related to the travel of the vehicle, for instance, the contents for assisting the drive of the vehicle.

The display controller 185 controls the terminal display 140 to display the various information such as the map information on the terminal display 140.

The map matching section 186 performs the map matching processing for displaying the current-position recognized by the current-position recognizer 181 based on the map information acquired from the server 500.

The route setting section 189 sets the first guidance route T1 as shown in Fig. 7 according to the candidate route information about the candidate route Rj acquired from the server 500. Additionally, the route setting section 189 resets the second guidance route T2 as shown in, for instance, Figs. 13 and 11 according to the research route information about the first research route Qj or the second research route Pi acquired from the server 500.

The server 500 can communicate with the terminal unit 400 over the network 300. The server 500 is capable of acquiring various information from other servers (not shown) of various government offices such as Meteorological Agency and National Police Agency, private organizations, VICS and business enterprises over the network 300. The information to be acquired may be travel information for the vehicle, i.e., various travel related information used during the travel of the vehicle such as weather information, VICS data including traffic-congestions, traffic accidents, constructions, traffic controls, and shop information about various shops including gasoline stations and restaurants etc. As shown in Fig. 17, the server 500 includes an interface 510 also functioning as a server transceiver, an input section 520, a display 530, a storage 540, a CPU (Central Processing Unit) 550 and so on.

The interface 510 performs a preset input interface processing for a server signal Ssv input over the network 300 so as to output the server signal Ssv as a processing server signal Sc to the CPU 550. When the processing server signal Sc to be transmitted from the CPU 550 to the terminal unit 400 is input in the interface 510, the interface 510 performs preset output interface processing for the input processing server signal Sc so as to output the processing server signal Sc as a server signal Ssv to the terminal unit 400 over the network 300. Note that the server signal Ssv can be appropriately output only to a predetermined terminal unit 400 on the basis of the information described in the processing server signal Sc.

Like the terminal input section 130, the input section 520, which may be a keyboard, a mouse or the like, has various operation buttons and operation knobs (not shown) to be used for input operations. The operation buttons and the operation knobs are used for setting the setting items such as: to input the settings for operations of the server 500; to set information to be stored in the storage 540; and to update the information stored in the storage 540. When the setting items are input, the input section 520 outputs a signal Sin corresponding to the setting items to the CPU 550 so as to apply the settings. In place of the operation buttons and the operation knobs, the input section 520 may include a touch panel that may be arranged at the display 530 for input operations and a sound input section for the input operations thereof as long as various settings can be input.

The display 530, just like the terminal display 140, displays a signal Sdp representing image data sent from the CPU 550 under the control of the CPU 550. The image data may be those acquired from the storage 540 and those acquired from external servers over the network 300.

The storage 540 readably stores various information such as map information shown in Figs. 2 and 3 received from the terminal unit 400 and external servers. The storage 540 may be drives or drivers for readably storing data on a recording medium such as a HD, a DVD, an optical disc and a memory card. Information to be stored may include, for example, information input by the input operation at the input section 520, and the contents of the information stored with the input operation can be appropriately updated. The storage 540 also stores information such as various programs that run on an OS (Operating System) controlling the whole operation of the server 500 and the navigation system 200.

The storage 540, for instance, stores the retrieval information for acquiring information of a predetermined point in the map information. More specifically, the retrieval information provided upon the retrieval request from the terminal unit 400 includes various information about contents and guidance of names of states, cities, regions and points, which are units used to gradually divide the map information into smaller areas, as well as various information about shops as points. The retrieval information is structured in a tree structure table so that item information are hierarchically associated with each other.

The storage 540 stores personal information about users who use the navigation system 200 with the terminal unit 400. The personal information may include a name and an address, a user ID number and a password assigned to each user, a type of the terminal unit 400 for the use of the navigation system 200, and an address number of the terminal unit 400 used for communicating with the terminal unit 400. Furthermore, the storage 540 stores various information used for performing the navigation processing in a manner readable by the CPU 550.

As shown in Fig. 18, the CPU 550 includes a map output section 551, a VICS data acquirer 552, a route search section 553 also functioning as a current-position information acquirer and a destination information acquirer, a research section 554 also functioning as a way point information acquirer and a route setting information acquirer, an information retriever 555 and the like.

The map output section 551 responds to the input of the processing server signal Sc to refer to the information requesting a distribution of the information about the map information contained in the processing server signal Sc, and retrieves the requested information from the map information stored in the storage 540, e.g., the display data VM and matching data MM corresponding to a predetermined area to read it out as the memory signal Sm. The map output section 551 appropriately converts the read memory signal Sm into a processing server signal Sc, outputs the processing server signal Sc to a predetermined or all terminal units 400 via the interface 510 and the network 300 on the basis of the processing server signal Sc, and distributes the requested information contained in the map information.

The VICS data acquirer 552, just like the VICS receiver 120 of the first embodiment, responds to the input of the processing server signal Sc and refers to the information about the request for searching the respective candidate routes contained in the processing server signal Sc so as to acquire the VICS data from the VICS (not shown).

The route search section 553, just like the route search section 187 of the first embodiment, responds to the input of the processing server signal Sc and refers to the information about the request for searching the candidate route contained in the processing server signal Sc so as to generate candidate route information also functioning as route information about the candidate route Rj and the candidate route Rp as the memory signal Sm. Then, the generated memory signal Sm is converted into a processing server signal Sc, the processing server signal Sc is output to a predetermined or all terminal units 400 via the interface 510 and the network 300 on the basis of the processing server signal Sc, and the searched candidate route Rj and the candidate route Rp and the like are notified.

Based on the input processing server signal Sc, the research section 554 performs the same processing as the research section 188 of the first embodiment according to the information about the request for researching the first research route or the second research route contained in the processing server signal Sc to generate the research route information also functioning as the route information about the first research route Qj and the second research route Pi in the form of memory signal Sm. Then, the generated memory signal Sm is converted into a processing server signal Sc, the processing server signal Sc is output to a predetermined or all terminal units 400 via the interface 510 and the network 300 on the basis of the processing server signal Sc, and the researched first research route Qj, the second research route Pi and the like are notified.

The information retriever 555, just like the information retriever 190 of the first embodiment, responds to the input of the processing server signal Sc and refers to the information about the retrieval request for the retrieval information contained in the processing server signal Sc so as to hierarchically search the retrieval information stored in the storage 540 typically on the basis of item information and read it as the memory signal Sm. Then, the read memory signal Sm is converted into a processing server signal Sc, the processing server signal Sc is output to a predetermined or all terminal units 400 via the interface 510 and the network 300 on the basis of the processing server signal Sc, and the retrieval information is distributed.

The CPU 550 responds to the signal Sin input from the input section 520 by the input operation at the input section 520, and appropriately performs calculation based on the contents corresponding to the input operation to appropriately generate a signal Sdp or the like. Then the generated various signals are output to the display 530, the interface 510 so as to the storage 540 and operates them for executing the input contents.

### [Operation of Navigation System]

Now, the operation of the navigation system 200 will be described with reference to the attached drawings. The processing that is substantially the same as those of the first embodiment will be described only briefly.

### (Processing for Setting First Guidance Route)

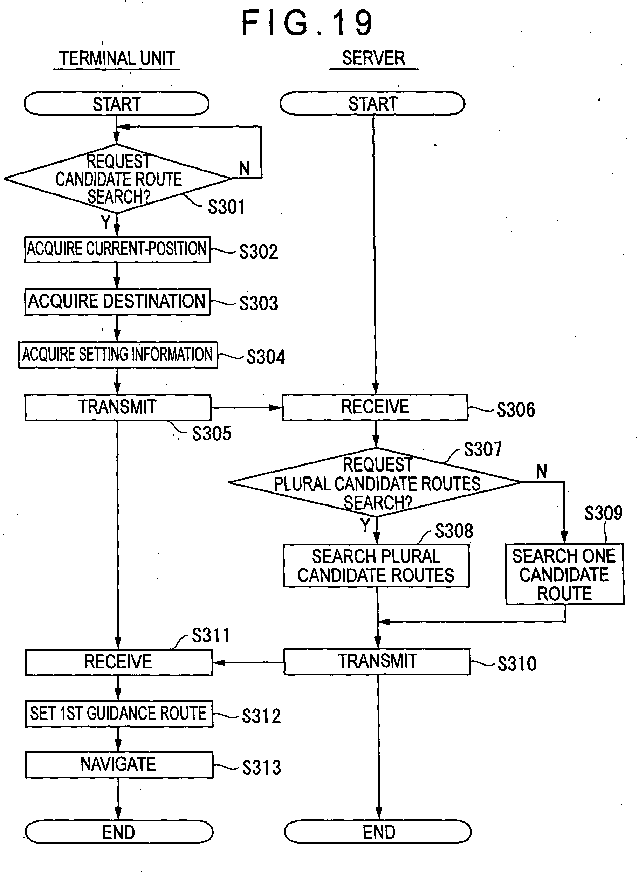

Firstly, the processing for setting the first guidance route T1 as one of the operations of the navigation system 200 will be described with reference to Fig. 19. Fig. 19 is a flowchart showing a processing for setting the first guidance route.

Firstly, the user in the vehicle turns ON the terminal unit 400 to supply the power thereto. When the power is supplied, the processor 430 controls the terminal display 140 to display a main menu and a display screen prompting the user to set a specific operation to be executed by the terminal unit 400.

Firstly as shown in Fig. 5, the user operates the terminal input section 130 to set a command for searching a candidate route for the travel. When recognizing the setting (step S301), the processor 430 makes the terminal display 140 display a display screen prompting the user to set various-information necessary for searching the candidate route such as the destination, the setting information representing whether or not the plurality of candidate routes are searched.

When recognizing the various information necessary for searching the candidate route, the processor 430 has the current-position recognizer 181 acquire the current-position information about the current-position (step S302) and has the destination recognizer 182 recognize the destination information about the set destination (step S303). The processor 430 also acquires the setting information about the setting items that have been input (step S304). The acquired current-position information, the destination information and the setting information are appropriately stored in the memory 420.

Thereafter, the processor 430 controls the transceiver 410 to transmit the current-position information, the destination information and the setting information stored in the memory 420 as well as a signal requesting for searching the candidate route to the server 500. When transmitting the various information, the transceiver 410 also transmits the terminal-specific information for identifying the terminal unit 400 (step S305).

When receiving the various information transmitted from the terminal unit 400 (step S306), the server 500 makes the route search section 553 of the CPU 550 determine whether or not the received setting information includes request for searching the plurality of candidate routes (step S307). Note that, the current-position information, the destination information, the setting information and the terminal-specific information received in the step S306 are appropriately stored in the storage 540.

When determining in the step S307 that the setting information includes the request for searching the plurality of candidate routes by the route search section 553, the CPU 550 makes the VICS data acquirer 552 acquire the VICS data. Thereafter, the CPU 550 executes a route search processing for searching the plurality of candidate routes Rj from the current-position of the vehicle to the destination based on the current-position information, the destination information, the setting information and the VICS data (step S308). To be more specific, the route search section 553 generates the candidate route information about, for instance, the five candidate routes Rj as shown in Fig. 6 that meets the requirements of the user, using the map information stored in the storage 540. The candidate route information is appropriately stored in the storage 540.

On the other hand, when the route search section 553 recognizing that the information includes the request for searching one candidate route in the step S307, the CPU 550 performs the same processing as the step S308, and then performs a route search processing for searching one candidate route Rp from the current-position of the vehicle to the destination (step S309). In other words, the route search section 553 generates single candidate route information about the one candidate route Rp as shown in Fig. 6 having the minimum cost in consideration of the travel time and the travel distance, using the map information stored in the storage 540. The generated candidate route information is appropriately stored in the storage 540.

The server 500 controls the interface 510 on the basis of the terminal-specific information received in the step S306 and appropriately transmits the candidate route information obtained by the route search processing to the predetermined terminal unit 400 together with the map information (step S310). Here, the matching data MM may also be acquired in advance on the basis of the current-position information. The map information to be transmitted needs to include only the matching mesh information MMx of the matching data MM that contains the nodes N and the links L representing the roads of the candidate route Rj and the candidate route Rp, the display mesh information VMx of the display data VM for other areas, the name information VMxA and the background information VMxC in the area corresponding to the matching mesh information MMx.

The processor 430, which has received the various information, of the terminal unit 400 (step S311) appropriately stores the received various information in the memory 420. The processor 430 then sets the first guidance route T1 by the route setting section 189 based on the received various information (step S312).

To be more specific, when recognizing that the setting information including the request for searching the plurality of candidate routes is generated in the step S304, the processor 430 makes the route setting section 189 execute, for instance, a following processing. That is, the processor 430 operates the display controller 185 to display, for instance, the five candidate routes Rj as shown in Fig. 6 by superimposing the routes one-by-one on the map information according to the candidate route information about the five candidate routes received in the step S312 and calculated by the server 500, as well as an indication prompting the user to set the route selecting information for selecting one of the displayed candidate routes Rj. The processor 430 has the route setting section 189 recognize the setting of the route selecting information by the input operation of the user, and set the candidate route R1 as the first guidance route T1 according to the candidate route information about, for instance, the candidate route R1 selected in response to this route selecting information. Then, the candidate route information about the candidate route R1 set as the first guidance route T1 is stored in the memory 420 as route setting information.

On the other hand, when recognizing that the setting information including the request for searching the one candidate route is generated in the step S304, the processor 430 makes the route setting section 189 executes a following processing for instance. That is, the processor 430 makes the route setting section 189 automatically sets the candidate route Rp as the first guidance route T1 according to the single candidate route information about the candidate route Rp, for instance, having the minimum cost received in the step S312 and calculated by the server 500. Then, the candidate route information about the candidate route Rp set as the first guidance route T1 is stored in the memory 420 as route setting information.

The processor 430 then performs the navigation based on the first guidance route T1 set in the step S312 (step S313). For example, if the candidate route R1 is set as the first guidance route T1, the processor 430 operates the display controller 185 to display, for instance, the candidate route R1 as the first guidance route T1 on the terminal display 140 as shown in Fig. 7 by superimposing it on the map information. On the other hand, if the candidate route Rp is set as the first guidance route T1, the display controller 185 displays, for instance, the candidate route Rp as the first guidance route T1 on the terminal display 140 as shown in Fig. 8 by superimposing it on the map information. Additionally, as shown in Figs. 7 and 8, the display-controller 185 displays an-icon As representing the current-position of the vehicle based on the current-position information and an icon Ag representing the destination based on the destination information etc. by superimposing them on the first guidance route T1. The processor 430 then controls the guidance notifying section 184 so that the sound output section 150 outputs sounds to perform the navigation based on the first guidance route T1.

Thereafter, the processor 430 makes the current-position recognizer 181 recognize the current-position of the vehicle, and execute a processing such as generating the travel status information representing that the vehicle travels based on the first guidance route T1 or that the vehicle travels regardless of the first guidance route T1. The generated travel status information is appropriately stored in the memory 420.

### (Processing for Resetting Second Guidance Route)

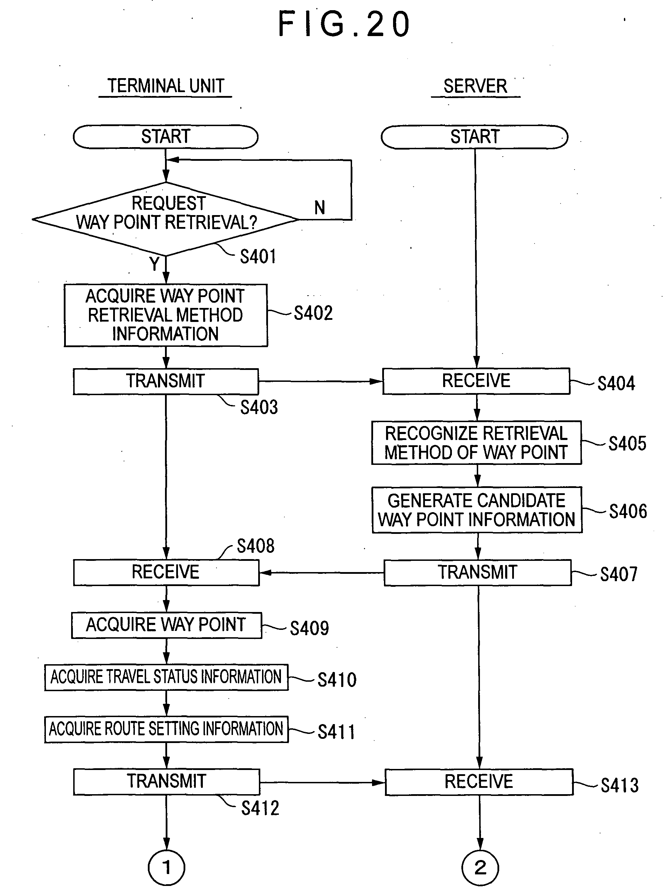

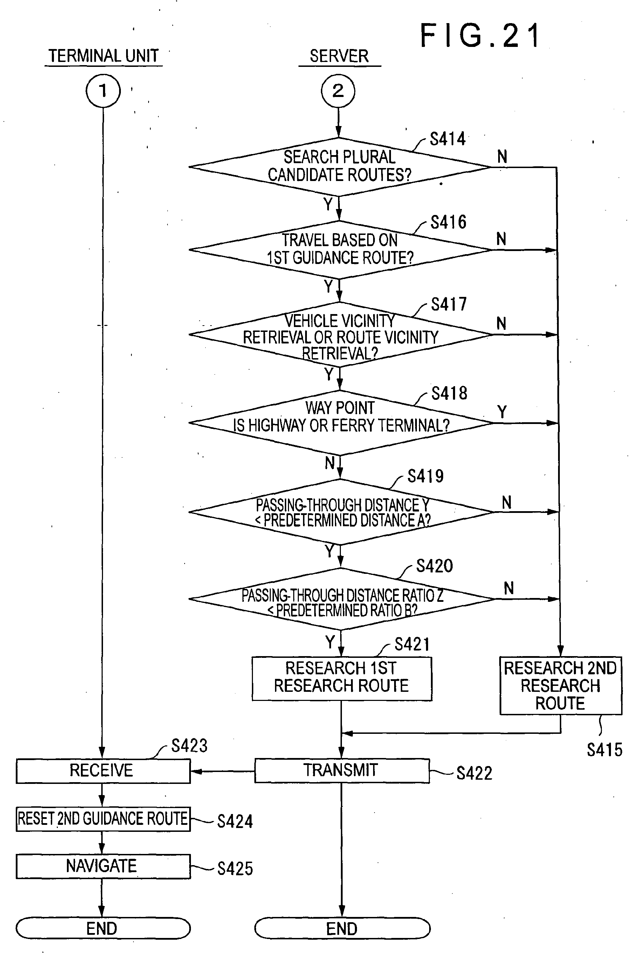

Now, the processing for resetting a second guidance route T2 as one of the operations of the navigation system 200 will be described with reference to Figs. 20 and 21. Figs. 20 and 21 are flowcharts each showing a processing for resetting the second guidance route.

Firstly as shown in Fig. 20, the user operates the terminal input section 130 to set a command for searching a way point where the vehicle passes through. When recognizing the setting of the instruction for searching the way point (step S401), the processor 430 controls the display controller 185 to display on the terminal display 140 a display screen prompting the user to set the way point retrieval method information about the retrieval method of the way point.

When acquiring the set way point retrieval method information (step S402), the processor 430 appropriately stores the acquired way point retrieval method information in the memory 420. The processor 430 then controls the transceiver 410 to transmit the way point retrieval method information stored in the memory 420 to the server 500 as well as a signal requesting for searching the way point. When transmitting the way point retrieval method information, the transceiver 410 also transmits the terminal-specific information for identifying the terminal unit 400 (step S403).

When receiving the various information transmitted from the terminal unit 400 (step S404), the server 500 has the information retriever 555 of the CPU 550 recognize the retrieval method of the way point based on the received way point retrieval method information (step S405). Note that, the way point retrieval method information and the terminal-specific information received in the step S404 are appropriately stored in the storage 540. After this, the information retriever 555 appropriately searches the retrieval information stored in the storage 540 according to the retrieval method recognized in the step S405 to acquire at least single way point information about the way point. Then the CPU 550 operates the information retriever 555 to generate the candidate way point information including the acquired way point information (step S406). The server 500 controls the interface 510 on the basis of the terminal-specific information received in the step S404 and appropriately transmits the candidate way point information to the predetermined terminal unit 400 (step S407).

After that, the processor 430, which has received the candidate way point information, of the terminal unit 400 (step S408) has the way point recognizer 183 acquire the way point information (step S409). To be more specific, the processor 430 has the display controller 185 display the way point information contained in the candidate way point information, and display an indication prompting the user to set way point selecting information instructing selection of at least one way point information from the respective displayed way point information, both on the terminal display 140. The processor 430 then operates the way point recognizer 183 to recognize the set way point selecting information, and to acquire the way point information selected on account of the recognized way point selecting information. The candidate way point information received in the step S408 and the way point information acquired in the step S409 are appropriately stored in the memory 420.

The processor 430 then acquires, for instance, the latest travel status information generated by the current-position recognizer 181 from the memory 420 (step S410), and also acquires the route setting information about the first guidance route T1 from the memory 420 (step S411). The processor 430 controls the transceiver 410 to transmit the way point information, the travel status information and the route setting information stored in the memory. 420 together with a signal for researching the first research route or the second research route as well as the terminal-specific information.

When receiving the various information transmitted from the terminal unit 400 (step S413), as shown in Fig. 21, the server 500 makes the research section 554 of the CPU 550 determine whether or not the route search section 553 has searched the plurality of candidate routes in response to the determination of the processing in the step S307 (step S414). Note that, the various information received in the step S413 are appropriately stored in the storage 540.

When determining that the route search section 553 has not searched the plurality of candidate routes in the step S414, the research section 554 researches the second research route Pi (step S415).

More specifically, the research section 554 acquires the current-position information, the destination information, the way point information and the setting information from the storage 540. The CPU 550 acquires the VICS data by the VICS data acquirer 552. The CPU 550 controls the research section 554 to research the second research route Pi using the map information and the like stored in the storage 540 based on the acquired various information, and generates research route information about the second research route Pi, for instance, having the minimum cost in consideration of the travel time and the travel distance. The research route information is appropriately stored in the storage 540.

On the other hand, when determining that the route search section 553 has searched the plurality of candidate routes in the step S414, the research section 554 determines whether or not the vehicle travels based on the first guidance route T1 (step S416). In other words, the research section 554 acquires the travel status information from the storage 540, and determines whether or not the vehicle travels based on the first guidance route T1 according to the contents included in the acquired travel status information.

When determining that the vehicle travels regardless of the first guidance route T1 in the step S416, the research section 554 executes the processing of the step S415. On the other hand, when determining that the vehicle travels based on the first guidance route T1 in the step S416, the research section 554 determines whether the retrieval method of the way point recognized in the step S405 is either the vehicle vicinity retrieval or the route vicinity retrieval (step S417).

When determining that the retrieval method is not the vehicle vicinity retrieval or the route vicinity retrieval, in other words, when determining that the retrieval method is the address retrieval or the phone number retrieval in the step S417, the research section 554 executes the processing of the step S415. On the other hand, when determining that the retrieval method is the vehicle vicinity retrieval or the route vicinity retrieval in the step S417, the research section 554 determines whether or not the way point identified by the way point information acquired in the step S413 is a facility allowing the vehicle to travel quickly like a highway or a ferry terminal (step S418).

Then, in the step S418, the research section 554 executes the processing of the step S415 when determining that the way point is a facility allowing the vehicle to travel quickly. On the other hand, when determining that the way point is not a facility allowing the vehicle to travel quickly in the step S418, in other words, when determining that the way point is a facility like a restaurant, the research section 554 executes a following processing for instance. That is, the research section 554 determines whether or not a passing-through distance Y which is the distance from the first guidance route T1 to the way point is shorter than a predetermined distance A preset as, for example, 500m (step S419). More specifically, the research section 554 acquires the way point information and the route setting information from the storage 540. Then, the passing-through distance Y is calculated based on the acquired various information, and it is determined whether or not the passing-through distance Y is shorter than the predetermined distance A. The calculated passing-through distance Y is appropriately stored in the storage 540.

The research section 554 executes the processing of the step S415 when determining that the passing-through distance Y is longer than the predetermined distance A in the step S419. On the other hand, when determining that the passing-through distance Y is shorter than the predetermined distance A in the step S419, the research section 554 recognizes whether or not the passing-through distance ratio Z, or a value in which the passing-through distance Y is divided by the route distance X representing the entire distance of the first guidance route T1 is smaller than a predetermined ratio B preset as, for instance, 0.1 (step S420). More specifically, the research section 554 acquires the passing-through distance Y and the route setting information from the storage 540. Then, the route distance X and the passing-through distance ratio Z are calculated based on the acquired various information, and it is determined whether or not the passing-through distance ratio Z is 0.1 or smaller. The calculated route distance X and the passing-through distance ratio Z are appropriately stored in the storage 540.

When determining that the passing-through distance ratio Z is greater than the predetermined ratio B in the step S420, the research section 554 executes the processing of the step S415. On the other hand, when it is determined that the passing-through distance ratio Z is smaller than the predetermined ratio B in the step S420, the first research route Qj is researched (step S421).

More specifically, the research section 554 acquires the current-position information, the destination information, the way point information and the setting information from the storage 540. The CPU 550 acquires the VICS data by the VICS data acquirer 552. Further, the CPU 550 makes the research section 554 acquire the route setting information from the storage 540. Then, the CPU 550 makes the research section 554 research the first research routes Qj based on the acquired various information using the map information and the like stored in the storage 540, and calculate the distance of a section of the first guidance route T1 included in each of the researched first research routes Qj. After that, the research route information about the first research route Qj of which the calculated distance of the section is the longest is generated. The research route information is appropriately stored in the storage 540.

The server 500 controls the interface 510 on the basis of the terminal-specific information received in the step S413 and appropriately transmits the research route information to the predetermined terminal unit 400 together with the map information (step S422).

Then, the processor 430, which has received the various information, of the terminal unit 400 (step S423) appropriately stores the received various information in the memory 420. The processor 430 then resets the second guidance route T2 by the route setting section 189 based on the received various information (step S424).

To be more specific, the processor 430 makes the route setting section 189 automatically reset the first research route Qj or the second research route Pi as the second guidance route T2 according to the research route information about the first research route Qj or the second research route Pi calculated by the server 500. Then, the research route information about the first research route Qj or the second research route Pi reset as the second guidance route T2 is stored in the memory 420 as route setting information.

The processor 430 then performs the navigation according to the second guidance route T2 set in the step S424 (step S425). For example, if the second research route P1 is reset as the second guidance route T2, the processor 430 operates the display controller 185 to display, for instance as shown in Fig. 11, the second research route P1 on the terminal display 140 as the second guidance route T2 by superimposing it on the map information. Alternatively, if the first research route Q2 is set as the second guidance route T2, the processor 430 operates the display controller 185 to display, for instance as shown in Fig. 13, the first research route Q2 on the terminal display 140 as the second guidance route T2 by superimposing it on the map information. Additionally, the display controller 185 displays an icon As representing the current-position S of the vehicle based on the current-position information, an icon Ag representing the destination G based on the destination information, an icon Av representing the way point V based on the way point information and the like by superimposing them on the second guidance route T2 as shown in Figs. 11 and 13. The processor 430 then controls the guidance notifying section 184 so that the sound output section 150 outputs sounds to perform the navigation based on the second guidance route T2. After that, the processor 430 makes the current-position recognizer 181 generate the travel status information and store it in the memory 170.

### [Advantages of Second Embodiment]

As described -above, in the second embodiment, the--navigation system 200 generates the current-position information, the destination information and the setting information by way of the terminal input section 130 and the processor 430 of the terminal unit 400. Then, the terminal unit 400 has the transceiver 410 transmit the current-position information, the destination information and the setting information to the server 500. When acquiring the various information transmitted from the terminal unit 400 by the interface 510, the server 500 has the route search section 553 search the plurality of candidate routes Rj from the current-position to the destination according to the received various information and generate the candidate route information about the plurality of candidate routes Rj. The server 500 makes the interface 510 transmit the candidate route information to the terminal unit 400. When receiving the candidate route information by the transceiver 410, the terminal unit 400 has the route setting section 189 of the processor 430 set one of the plurality of candidate routes Rj as the first guidance route T1 according to the candidate route information and store the candidate route information about the candidate route Rj set as the first guidance route T1 in the memory 420 as the route setting information. The processor 430 has the way point recognizer 183 acquire the way point information and store it in the memory 420. Then, the terminal unit 400 has the transceiver 410 transmit the route setting information and the way point information to the server 500. The server 500 makes the interface 510 receive the various information transmitted from the terminal unit 400, and makes the research section 554 of the CPU 550 search the first research route Qj to the destination giving priority to the first guidance route T1, i.e., passing the way point including at least a section of the first guidance route T1, and generate the research route information about the searched first research route Qj. The server 500 transmits the research route information to the terminal unit 400 by the interface 510. After that, the terminal unit 400 receives the research route information transmitted from the server 500 by the transceiver 410.

Accordingly; based on the research route information received from the server 500, the navigation system 200 can research the first research route Qj including at least a section of the first guidance route T1 even after the first guidance route T1 has been set. Thus, the navigation system 200 can reset the first research route Qj reflecting the first guidance route T1 as the second guidance route T2 even after the first guidance route T1 has been set. Additionally, since the server 500 is provided with the route search section 553 for searching the candidate route Rj and the research section 554 for researching the first research route Qj and the second research route Pi, the configuration of the terminal unit 400 can be simplified. Therefore, because the cost of the terminal unit 400 can be saved, the terminal unit 400 can be provided at lower price and the utilization of the navigation system 200 can be expanded.

Further, when receiving the candidate route information by the transceiver 410, the terminal unit 400 makes the display controller 185 display the plurality of candidate routes Rj on the terminal display 140, and also display an indication prompting the user to set the route selecting information for selecting one of these candidate routes Rj. After that, when recognizing the setting of the route selecting information by the user, the processor 430 of the terminal unit 400 makes the route setting section 189 set the candidate route Rj selected according to the route selecting information as the first guidance route T1 and store the candidate route information about the candidate route Rj set as the first guidance route T1 in the memory 420, as the route setting information. The processor 430 has the way point recognizer 183 acquire the way point information and store it in the memory 420. Then, the terminal unit 400 transmits the route setting information and the way point information to the server 500 by the transceiver 410. The server 500 has the interface 510 receive the various information transmitted from the terminal unit 400 and execute a following processing by the research section 554 of the CPU 550 when recognizing that the first guidance route T1 is the one selected by the user from the plurality of candidate route Rj. In other words, the server 500 makes the research section 554 search the first research route Qj to the destination giving priority to the first guidance route T1, i.e., passing the way point including a section of the first guidance route T1, and generate the research route information about the first research route Qj. Accordingly, the navigation system 200, using the terminal unit 400, can research the first research route Qj including a section of the first guidance route T1 intentionally selected by the user out of the plurality of candidate routes Rj, in other words, the first guidance route T1 where the user wants to drive continuously even after passing the way point, according to the research route information received from the server 500. Thus, the navigation system 200 can reset the first research route Qj reflecting the first guidance route T1 desired by the user as the second guidance route T2 even after the first guidance route T1 has been set.

The terminal unit 400 has the current-position recognizer 181 of the processor 430 generate the travel status information indicating whether or not the vehicle travels based on the first guidance route T1, and also has the transceiver 410 transmit the travel status information to the server 500. When receiving by the interface 510 the travel status information transmitted from the terminal unit 400 and determining by the research section 554 of the CPU 550 that the vehicle travels based on the first guidance route T1 according to the travel status information, the server 500 searches the first research route Qj to the destination passing the way point based on the first guidance route T1. The server 500 then makes the interface 510 transmit the research route information to the terminal unit 400. After that, the terminal unit 400 makes the transceiver 410 receive the research route information transmitted from the server 500.

Therefore, the navigation system 200, using the terminal unit 400, can research the first research route Qj based on the first guidance route T1 where the user intentionally travels without any obligations, that is, where the user wants to travel even after passing the way point, according to the research route information received from the server 500. Thus, the navigation system 200 can reset the first research route Qj reflecting the first guidance route T1 desired by the user as the second guidance route T2 even after the first guidance route T1 has been set.

Furthermore, the terminal unit 400 makes the current-position recognizer 181 of the processor 430 determine whether or not the current-position of the vehicle is located on the first guidance route T1, and also determine whether or not the vehicle travels based on the first guidance route T1. According to this determination, the travel status information indicating whether or not the vehicle travels based on the first guidance route T1 is appropriately generated. Therefore, using the current-position recognizer 181, the processor 430 can determine whether or not the vehicle travels based on the first guidance route T1 by a simple method determining whether or not the current-position of the vehicle is located on the first guidance route T1. Accordingly, the processing time for generating the travel status information can be shortened.

Additionally, the server 500 makes the research section 554 of the CPU 550 calculate the distance of a section of the first guidance route T1 contained in each of the plurality of first research routes Qj, generate the research route information about the first research route Qj with the calculated distance of the section being the longest, and transmit the information to the terminal unit 400. The terminal unit 400 then makes the route setting section 189 acquire the research route information transmitted from the server 500, and automatically reset the first research route Qj as the second guidance route T2 according to the acquired research route information. Therefore, the navigation system 200 can reset the first research route Qj the most similar to the first guidance route T1 where the user wants to travel even after passing the way point as the second guidance route T2. Thus, the navigation system 200 can reset the second guidance route T2 further reflecting the first guidance route T1 desired by the user.

When recognizing that the passing-through distance Y from the first guidance route T1 to the way point is shorter than the predetermined distance A, the server 500 makes the research section 554 of the CPU 550 research the first research route Qj to the destination passing the way point based on the first guidance route T1. Because of this, when the way point located around the first guidance route T1 where the user wants to travel is set, the navigation system 200 can research the first research route Qj based on the first guidance route T1, and reset the first research route Qj. Accordingly, the navigation system 200 can reset the first research route Qj meeting with the user's wishes further as the second guidance route T2.

When recognizing that the passing-through distance ratio Z representing a value in which the passing-through distance Y is divided by the route distance X, or the entire distance of the first guidance route T1, is smaller than the predetermined ratio B, the server 500 makes the research section 554 research the first research route Qj to the destination passing the way point based on the first guidance route T1. Because of this, when the way point located relatively close to the first guidance route T1 where the user wants to travel is set, the navigation system 200 can research the first research route Qj based on the first guidance route T1, and reset the first research route Qj. Accordingly, the navigation system 200 can reset the first research route Qj meeting with the user's wishes further as the second guidance route T2.

The server 500 has the information retriever 555 of the CPU 550 search at least one way point based on the retrieval method of the way point contained in the way point retrieval method information set by the user and transmitted from the terminal unit 400. Then, the candidate way point information including the way point information about the way point is generated and then transmitted to the terminal unit 400. After that, the server 500 makes the research section 554 acquire the way point information set by the user and transmitted from the terminal unit 400. Therefore, the user can acquire the candidate way point information from the server 500 without the setting of specific information about the way point, and select the one to set the desirable candidate way point from the candidate way point information. Thus, the user can set the way point more easily.

When recognizing that the retrieval method of the way point is the one like the vehicle vicinity retrieval or the route vicinity retrieval for searching, for instance, the way point around the vehicle, the server 500 makes the research section 554 research the first research route Qj to the destination passing the way point based on the first guidance route T1. Because of this, when the way point located around the vehicle on which the user rides is set, the navigation system 200 can research the first research route Qj based on the first guidance route T1 where the user wants to drive, and reset the first research route Qj. Accordingly, the navigation system 200 can reset the first research route Qj meeting with the user's wishes further as the second guidance route T2.

When recognizing that the way point is searched as a facility allowing the vehicle to drive quickly, e.g. a highway, the server 500 makes the research section 554 research the second research route Pi to the destination using a highway or the like regardless of the first guidance route T1, instead of the first research route Qj based on the first guidance route T1. Owing to this, when the user sets, for instance, a highway which is a way other than the one driving on the first guidance route T1 because the user wants to travel quickly, the navigation system 200 can research the second research route Pi using a highway regardless of the first guidance route T1, and reset the second research route Pi. Accordingly, the navigation system 200 can reset the second research route Pi meeting with the user's wishes as the second guidance route T2.

### [Modifications of Embodiments]

The present invention is not limited to the above specific embodiments, but includes modifications and improvements as long as the objects of the present invention can be attained.

The mobile body is not limited to a vehicle, but includes any mobile body such as an airplane or a ship. The user oneself may be the mobile body if the current-position of the user carrying the terminal unit 400 is recognized as the current-position of the terminal unit 400. Additionally, as mentioned earlier, a mobile phone or a PHS (Personal Handyphone System) may be used as the terminal unit 400 that can be carried directly by the user, while the base station of the mobile phone or the PHS may be used as the server 500. With this arrangement, the mobile phone or the PHS may acquire information from the base station.

In the respective embodiments, although the research section 188, 554 includes the function that determines whether or not the plurality of candidate routes have been searched using the route search section 187, 553, as well as the function that determines whether or not the vehicle travels based on the first guidance route T1, only one of the functions can be provided thereto. For example, in the case that the route search section 187, 553 lacks the function that determines whether or not the plurality of candidate routes have been searched, the research section 188, 554 executes the processing of the step S208, S416 when acquiring the various information in the step S204, S413. Therefore, the processing of the step S205, S414 can be omitted, thereby shortening the processing time for resetting the second guidance route T2. In contrast, in the case that the route search section 187, 553 lacks the function that determines whether or not the vehicle travels based on the first-guidance route T1, the research section 188, 554 executes the processing of the step S209, S417 when determining that the plurality of candidate routes have been searched by the route search section 187, 553. Therefore, the navigation device 100 or the navigation system 200 can omit the processing of the step S208, S416, thereby shortening the processing time for resetting the second guidance route T2.

In the respective embodiments, although the travel status information is generated based on the determination by the current-position recognizer 181 indicating whether or not the current-position of the vehicle is located on the guidance route T1, T2, it is not limited thereto. For example, when the current-position recognizer 181 recognizes that the vehicle travels for a predetermined distance or longer based on the guidance route T1, T2, the travel status information representing that the vehicle travels based on the guidance route T1, T2 may be generated. Here, a method for storing driving history information about the driving history of the vehicle in the memory 170, 420 and referring to the stored driving history information to recognize it can be exemplified as a method for recognizing that the vehicle travels for a predetermined distance or longer based on the guidance route T1, T2, however, it is not limited thereto. With such a configuration, since the current-position recognizer 181 recognizes whether or not the vehicle actually travels for a predetermined distance or longer based on the guidance route T1, T2, more accurate travel status information can be generated. Owing to this, the navigation device 100 or the navigation system 200 can reset the first research route Qj or the second research route Pi meeting with the user's wishes more precisely.

In the respective embodiments, although single research route information is generated by the research section 188, 554, it is not limited thereto. For instance, a following configuration is available. That is, after the plurality of research route information are generated by the research section 188, 554, for instance, the plurality of first research routes Qj are displayed on the terminal display 140 based on the plurality of research route information under the control of the display controller 185 as well as an indication prompting the user to select one of the displayed first research routes Qj. Then, according to the setting of the route selecting information to select one of the first research routes Qj by the user, the selected first research route Qj may be reset as the second guidance route T2. With such a configuration, the navigation device 100 or the navigation system 200 can reset the one desired by the user out of the plurality of first research routes Qj or the second research routes Pi as the second guidance route T2. Therefore, the utility of the navigation device 100 or the navigation system 200 can be enhanced.

In the respective embodiments, the distance of the section of the first guidance route T1 included in each of the researched first research routes Qj is calculated and the research route information, in which the first research route Qj with the calculated distance being the longest is set, is generated by the research section 188, 554, however, a following configuration is available. That is, the research section 188, 554 may calculate the travel distance from the current-position of the vehicle to the destination according to each of the researched first research routes Qj, and generate the research route information, in which the first research route Qj with the calculated distance being the shortest is set. With such a configuration, the navigation device 100 or the navigation system 200 may reset the first research route Qj with the shortest travel distance as the second guidance route T2. Therefore, such a navigation device 100 or a navigation system 200 that can reset the second guidance route T2 reflecting the first guidance route T1 desired by the user and realizing the shortest travel distance can be provided.

Alternatively, the research section 188, 554 may calculate the travel time required from the current-position of the vehicle to the destination according to each of the researched first research routes Qj, and generate the research route information, in which the first research route Qj with the calculated travel time being the least is set. With such a configuration, the navigation device 100 or the navigation system 200 may reset the first research route Qj with the least travel time as the second guidance route T2. Therefore, such a navigation device 100 or a navigation system 200 that can reset the second guidance route T2 reflecting the first guidance route T1 desired by the user and allowing the vehicle to travel quickly can be provided.

Further, the research section 188, 554 may calculate the cost in consideration of the travel time and the travel distance according to each of the researched first research routes Qj, and generate the research route information, in which the first research route Qj with the calculated cost being minimum is set. With such a configuration, the navigation device 100 or the navigation system 200 may reset the first research route Qj with the minimum cost as the second guidance route T2. Therefore, such a navigation device 100 or a navigation system 200 that can reset the second guidance route T2 reflecting the first guidance route T1 desired by the user and reducing the cost necessary for traveling can be provided.

In the respective embodiments, although the research section 188, 554 has the function that determines whether or not the passing-through distance Y from the first guidance route T1 to the way point is shorter than the predetermined distance A, the research section 188, 554 may not have that function. In this case, the research section 188, 554 executes the processing of the step S212, S420 when determining that the way point is a highway or the like in the step S210, S418. Therefore, the navigation device 100 or the navigation system 200 can omit the processing of the step S211, S419, thereby shortening the processing time for resetting the second guidance route T2.

In the respective embodiments, although the research section 188, 554 has the function that determines whether or not the passing-through distance ratio Z, i.e., the value in which the passing-through distance Y is divided by the route distance X representing the entire first guidance route T1, is smaller than the predetermined ratio B, the research section 188, 554 may not have that function. In this case, the research section 188, 554 executes the processing of the step S213, S421 when determining that the passing-through distance Y is shorter than the predetermined distance A in the step S211, S419. Therefore, the navigation device 100 or the navigation system 200 can omit the processing of the step S212, S420, thereby shortening the processing time for resetting the second guidance route T2.

In the respective embodiments, although the research section 188, 554 has the function that determines whether or not the retrieval method of the way point is the one, for instance, for searching the way point located around the vehicle, namely, the retrieval method is the vehicle vicinity retrieval, the research section 188, 554 may not have that function. In this case, the research section 188, 554 executes the processing of the step S210, S418 when determining that the vehicle travels based on the first guidance route T1 in the step S208, S416. Therefore, the navigation device 100 or the navigation system 200 can omit the processing of the step S209, S417, thereby shortening the processing time for resetting the second guidance route T2.

In the respective embodiments, although the research section 188, 554 has the function that determines whether or not the retrieval method of the way point is the one for searching a facility such as a highway allowing the vehicle to travel quickly, the research section 188, 554 may not have that function. In this case, the research section 188, 554 executes the processing of the step S211, S419 when determining that the retrieval method of the way point is the one, for instance, for searching the way point located around the vehicle, such as the vehicle vicinity retrieval in the step S209, S417. Therefore, the navigation device 100 or the navigation system 200 can omit the processing of the step S210, S418, thereby shortening the processing time for resetting the second guidance route T2.

In the respective embodiments, the information retriever 190, 555 searches at least one way point based on the retrieval method of the way point contained in the way point retrieval method information set by the user, and generates the candidate way point information including the way point information about the searched way point. The way point recognizer 183 then acquires the way point information according to the way point selecting information set by the user, however, it is not limited thereto, and a following configuration is available. That is, the information retriever 190, 555 may acquire the way point information by the way point recognizer 183 recognizing, for example, the input of text or the operation of a cursor displayed on a map screen set by the user, without the function that searches the way point based on the retrieval method of the way point contained in the way point retrieval method information.

In such a configuration, for example in the first embodiment, the navigation device 100 executes the processing for recognizing whether or not the way point information has been acquired instead of the processing in the step S204 without executing the processing of the step S201 through S203, then executes the processing of the step S205 after acquiring the way point. Since the way point is not searched by the information retriever 190, the processing of the step S210 is executed without the step S209, after the processing of the step S208 has been executed. Therefore, the navigation device 100 can omit the processing of the step S201 through S203 and S209, thereby shortening the processing time for resetting the second guidance route T2. Besides, the configuration of the information retriever 190 may be simplified, thus saving the cost of the navigation device 100.

On the other hand, for instance in the second embodiment, the navigation system 200 makes the terminal unit 400 execute the processing for recognizing whether or not the way point information has been acquired instead of the processing of the step S409, without executing the processing of the step S401 through S408. When acquiring the way point information, the processing of the step S410 and S412 is executed, and the various information are transmitted to the server 500. When receiving the various information from the terminal unit 400 in the step S413, the server 500 executes the processing of the step S414 and S416, then executes the processing of the step S418 without executing the step S417, since the retrieval has not been performed by the information retriever 555. Therefore, the navigation system 200 can omit the processing of the step S401 through S408 and S417, thereby shortening the processing time for resetting the second guidance route T2. Besides, the configuration of the information retriever 555 may be simplified, thus saving the cost of the navigation system 200. Further, since the processing of the step S407 and S408 can be omitted, the number of communications for transmitting/receiving information between the terminal unit 400 and the server 500 can be reduced by one time, thereby saving the communication expenses.

In the respective embodiments, although the route search section 187, 553 has the function that determines whether or not the information requesting the search the plurality of candidate routes is included in the setting information, it is not limited thereto, and a following configuration is available. That is, the route search section 187, 553 may search, for instance, the plurality of candidate routes unexceptionally when acquiring the current-position information, the-destination information and the setting information.

With this configuration, for instance in the first embodiment, the navigation device 100 executes the processing of the step S104, and then the step S106 without the step S105 when setting the first guidance route T1. Additionally, since the processing of the step S105 is not executed, the processing of the step S108 will not be executed. When resetting the second guidance route T2, the navigation device 100 executes the processing of the step S204, and then the step S208 without the step S205. Owing to this, the navigation device 100 can omit the processing of the step S105, S108 and S205, thereby shortening the processing time for resetting the first guidance route T1 and the second guidance route T2. Besides, the configuration of the route search section 187 may be simplified, thus saving the cost of the navigation device 100.

On the other hand, for instance in the second embodiment, the navigation system 200 makes the server 500 execute the processing of the step S306, and then the step S308 without the step S307 when setting the first guidance route T1. Additionally, since the processing of the step S307 is not executed, the processing of the step S309 will not be executed. When resetting the second guidance route T2, the navigation system 200 makes the server 500 execute the processing of the step S413, and then the step S416 without the S414. Therefore, the navigation system 200 can omit the processing of the step S308, S309 and S414, thereby shortening the processing time for resetting the first guidance route T1 and the second guidance route T2. Besides, the configuration of the route search section 553 may'be simplified, thus saving the cost of the navigation system 200.

Alternatively, the route search section 187, 553 may search, for instance, one candidate route unexceptionally when acquiring the current-position information, the destination information and the setting information.

With this configuration, for instance in the first embodiment, the navigation device 100 executes the processing of the step S104, and then the step S108 without the step S105 and S106 when setting the first guidance route T1. When resetting the second guidance route T2, the navigation device 100 executes the processing of the step S204, and then the step S208 without the step S205. Therefore, the navigation device 100 can omit the processing of the step S105, S106 and S205, thereby shortening the processing time for setting the first guidance route T1 and the second guidance route T2. Besides, the configuration of the route search section 553 may be simplified, thus saving the cost of the navigation device 100.

On the other hand, for instance in the second embodiment, the navigation system 200 makes the server 500 execute the processing of the step S306, and then the step S309 without the step S307 and S308 when setting the first guidance route T1. When resetting the second guidance route T2, the navigation system 200 makes the server 500 execute the processing of the step S413, and then the step S416 without the S414. Therefore, the navigation system 200 can omit the processing of the step S307, S308 and S414, thereby shortening the processing time for setting the first guidance route T1 and the second guidance route T2. Besides, the configuration of the route search section 553 may be simplified, thus saving the cost of the navigation system 200. Additionally, since the server 500 only searches the one candidate route, the number of the candidate route information to be transmitted to the terminal unit 400 in the step S310 can be one invariably. Because of this, in compared to the configuration in the second embodiment, the amount of information to be transmitted from the server 500 to the terminal unit 400 in the step S310 can be reduced, thus saving the communication expenses.

In the second embodiment, although the terminal unit 400 has the route setting section 189, it is not limited thereto. The route setting section 189 may provide on the server 500. Accordingly, the configuration of the processor 430 can be simplified, thereby reducing the cost of the terminal unit 400.

In the respective embodiments, in the case that the research section 188, 554 lacks the function that determines by the route search section 187, 553 whether or not the plurality of candidate routes have been searched, the first research route Qj which gradually approaching to the first guidance route T1 may be researched.

While the functions are realized in the form of programs in the above description, the functions may be realized in any form including a hardware such as a circuit board or elements such as IC (Integrated Circuit). In view of easy handling and promotion of the use, the functions are preferably stored and read from programs or recording media.

The arrangements and the operating procedures for the present invention may be appropriately modified as long as the scope of the present invention can be attained.

### [Advantages of Embodiments]

As described above, in the above-described embodiments, the navigation device 100 searches the plurality of candidate routes Rj from the current-position to the destination and sets one of the plurality of candidate routes Rj as the one first guidance route T1. When recognizing that the way point information has been acquired, the navigation device 100 researches the first research route Qj to the destination passing the way point including at least a section of the first guidance route T1. Accordingly, the navigation device 100 can research the first research route Qj including at least a section of the first guidance route T1 even after the first guidance route T1 has been set. Thus, the navigation device 100 can reset the first research route Qj reflecting the first guidance route T1 as the second guidance route T2 even after the first guidance route T1 has been set.

## Claims

1. An information-processing device, comprising:
a current-position information acquirer for acquiring current-position information about a current-position of a mobile body;
a destination information acquirer for acquiring destination information about a position of a destination to which the mobile body travels;
a way point information acquirer for acquiring way point information about a position of a way point to which the mobile body travels;
a route search section for searching a plurality of candidate routes from the current-position of the mobile body to the destination according to the current-position information and the destination information;
a route setting section for setting one of the plurality of candidate routes as a guidance route; and
a research section for searching a new route from the current-position of the mobile body to the destination including at least a section of the guidance route as well as the way point when it is recognized that new way point information is acquired after the guidance route is set.

2. The information-processing device according to claim 1, wherein the route setting section sets the candidate route as the guidance route when recognizing that the mobile body is located on the candidate route or that the mobile body is located around the candidate route after the mobile body starts moving and travels for a predetermined distance.

3. The information-processing device according to claim 1 or 2, wherein the route setting section sets the candidate route as the guidance route when recognizing that the mobile body travels for a predetermined distance or longer based on the candidate route.

4. The information-processing device according to any one of claims 1 to 3, wherein
the research section searches a plurality of new routes different with each other,
the route setting section calculates the distance of a section of the guidance route included in each of the plurality of new routes and sets the new route with the distance of the section being the longest as the guidance route.

5. The information-processing device according to any one of claims 1 to 3, wherein
the research section searches a plurality of new routes different with each other,
the route setting section calculates each travel distance of the plurality of new routes and sets the new route with the shortest travel distance as the guidance route.

6. The information-processing device according to any one of claims 1 to 3, wherein
the research section searches a plurality of new routes different with each other,
the route setting section calculates each travel time of the plurality of new routes and sets the new route with the least travel time as the guidance route.

7. The information-processing device according to any one of claims 1 to 6, wherein the research section determines whether or not a sectional distance from the way point to the guidance route is shorter than a predetermined distance, and searches a new route when determining that the sectional distance is shorter than the predetermined distance.

8. The information-processing device according to any one of claims 1 to 7, wherein the research section determines whether or not a ratio of a sectional distance of the guidance route to a sectional distance from the way point to the guidance route is smaller than a predetermined ratio, and searches a new route when determining that the ratio is smaller than the predetermined ratio.

9. The information-processing device according to any one of claims 1 to 8, wherein
the route search section searches the candidate routes in ascending order of the value of cost information using numeric as information about roads,
the research section generates corrected cost information in which a predetermined value is subtracted from the cost information about the guidance route set by the route setting section, and searches a new route using the corrected cost information.

10. An information-processing system for searching a travel route of a mobile body using a server connected to a terminal unit in a manner capable of transmitting/receiving various information over a network,
the terminal unit, comprising:
a current-position information generator for generating current-position information about a current-position of the mobile body;
a destination information generator for generating destination information about a position of a destination to which the mobile body travels;
a way point information generator for generating way point information about a way point to which the mobile body travels;
a route setting section for acquiring route information about a candidate route from the current-position of the mobile body to the destination and for generating route setting information including an instruction to set the candidate route as a guidance route;
a terminal notification controller for controlling a notifying section that notifies the guidance route; and
a terminal transceiver for transmitting to the server the current-position information, the destination information, the way point information and the route setting information and for receiving from the server the route information over the network,
the server, comprising:
a current-position information acquirer for acquiring the current-position information;
a destination information acquirer for acquiring the destination information;
a way point information acquirer for acquiring the way point information;
a route setting information acquirer for acquiring the route setting information;
a route search section for searching the candidate route according to the current-position information and the destination information and for generating route information about the candidate route;
a research section for searching a new route including at least a section of the guidance route as well as the way point and for generating the route information about a research route when recognizing that new way point information is acquired after the route setting information is acquired; and
a server transceiver for transmitting to the terminal unit the route information about the candidate route and the research route and for receiving from the terminal unit the current-position information, the destination information, the way point information and the route setting information over the network.

11. An information-processing method, comprising the steps of:
acquiring current-position information about a current-position of a mobile body;
acquiring destination information about a position of a destination to which the mobile body travels;
searching a candidate route from the current-position of the mobile body to the destination according to the current-position information and the destination information;
setting the candidate route as a guidance route; and
searching a new route from the current-position of the mobile body to the destination including at least a section of the guidance route as well as a way point when it is recognized that new way point information about the way point to which the mobile body travels is acquired after the guidance route is set.

12. An information-processing program executing the information-processing method according to claim 11 by a computer.

13. A recording medium storing the information-processing program according to claim 12 in a manner readable by a computer.
